# EUROPEAN PATENT APPLICATION

(11) **EP 4 823 151 A1**
(43) Date of publication of application: **14.10.2026**
(21) Application number: 24910599.0
(22) Date of filing: 04.12.2024
(51) Int. Cl.: H04W 24/02

(54) **COMMUNICATION METHOD, APPARATUS AND SYSTEM**

(30) Priority: 29.12.2023 CN 202311869868
(71) Applicant: Huawei Technologies Co., Ltd., Shenzhen, Guangdong 518129 (CN)
(72) Inventor: ZHOU, Xiaoyun, Shenzhen, Guangdong 518129 (CN); ZHANG, Yongjing, Shenzhen, Guangdong 518129 (CN); WANG, Yan, Shenzhen, Guangdong 518129 (CN)
(74) Representative: Pfenning, Meinig & Partner mbB
(86) International application number: PCT/CN2024/136845
(87) International publication number: WO 2025/139667

(57) **Abstract**

This application provides a communication method, apparatus, and system, which are applicable to intent-driven communication scenarios. The method is applied to a network intelligent agent function network element NIAF. The NIAF receives first information, where the first information describes an intent of a first user; determines a first subnet based on the intent of the first user, where the first subnet is determined from at least one subnet, or the first subnet is created by the NIAF; and sends second information, where the second information indicates the first subnet. The NIAF selects a subnet for a user based on an intent of the user or creates a network based on the intent of the user, and the user does not need to create a network. This reduces difficulty in using devices to create a network by the user, and can meet requirements of the user in a timely manner, thereby improving user experience.

## Description

This application claims priority to Chinese Patent Application No. 202311869868.0, filed with the China National Intellectual Property Administration on December 29, 2023 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

Intent-driven communication redefines a protocol interface between terminals and networks, shifting from signaling-driven to intent-driven. Leveraging network-native artificial intelligence (artificial intelligence, AI), intent-driven communication enables interpretation and efficient delivery of "human-machine-digital entity-intelligent entity" communication intents, driving network functions, intelligent agents, and multimodal terminals to fulfill intents of users. In current technologies, networking requires specialized knowledge from users, which is not user-friendly. For example, a user may simply want to use a mobile phone to control a camera to check on the home, but needs to first learn how to create a network between devices. This increases difficulty in using the devices by the user, affecting user experience.

### SUMMARY

This application provides a communication method, apparatus, and system, to reduce difficulty in using devices by a user, thereby improving user experience.

According to a first aspect, a communication method is provided, applied to a network intelligent agent function network element NIAF. The method may be performed by the NIAF, or may be performed by a module (for example, a chip or a circuit) in the NIAF, or may be performed by a logical node, a logical module, or software that can implement all or some of functions of the NIAF. This is not limited in this application.

The method includes: receiving first information, where the first information describes an intent of a first user; determining a first subnet based on the intent of the first user, where the first subnet is determined from at least one subnet, or the first subnet is created by the NIAF; and sending second information, where the second information indicates the first subnet.

In the method, an intent of a user indirectly expresses that a first device interacts with a device in a subnet, or a third device that accesses a communication network via the first device interacts with a device in a subnet.

In the method, the NIAF accesses the first subnet for the first device based on the intent of the user, or forms the first subnet for the third device based on the intent of the user. This reduces difficulty in using the devices to create a network by the user, and can meet requirements of the user in a timely manner, thereby improving user experience.

In some implementations, the first subnet is determined from the at least one subnet, and determining the first subnet based on the intent of the first user includes: determining, based on the intent of the first user, a service type of a subnet that the first user requests to access, where the first subnet is a subnet that is of the at least one subnet and that has a same service type as the subnet that the first user requests to access.

Alternatively, a service type of a subnet that the first user requests to access is determined based on the intent of the first user; and in the at least one subnet, a subnet that has a same service type as the subnet that the first user requests to access is used as the first subnet.

In this manner, a subnet of a same service type is selected and provided to the user, so that requirements of the user can be met.

In some implementations, the method further includes: receiving a first user identifier from the first device, where the first user identifier is associated with the first user; and determining the at least one subnet based on the first user identifier, where the at least one subnet is a subnet subscribed to by the first user.

In this manner, the first user is a user who has subscribed to the subnet, and therefore the subnet that has been subscribed to may be directly obtained.

In some implementations, the method further includes: receiving a first user identifier, where the first user identifier is associated with the first user; and
determining the at least one subnet based on the first user identifier and relationship information between the first user and a second user, where the at least one subnet is a subnet subscribed to by the second user, and the intent of the first user includes the relationship information between the first user and the second user.

In this manner, the first user and the user (the second user) who has subscribed to the subnet are not a same user, but information about the subnet subscribed to by the second user may be obtained based on the relationship information, thereby avoiding a failure to access the subnet.

In some implementations, the method further includes: determining, based on verification information of the second user, that a first device is allowed to access the first subnet, where the first device is a device that sends the intent of the first user.

Optionally, the NIAF may contact a digital intelligent human avatar of the second user or a user M (for example, by sending a confirmation SMS message) to confirm whether the first user is allowed to access the first subnet.

This manner can further improve security of using the subnet subscribed to by the second user.

In some implementations, the method further includes: updating subscription information, so that subscription information of the first subnet includes an identifier of the first user, or subscription information of the identifier of the first user includes an identifier of the first subnet.

In this manner, the subscription information is updated to facilitate subsequent subnet access.

In some implementations, the second information includes an identifier of the first subnet.

In some implementations, the identifier of the first subnet is used by the first device to establish a first protocol data unit PDU session, and the first device is the device that sends the intent of the first user.

In some implementations, if the first PDU session and a second PDU session that is established by a second device in the first subnet are in different management domains, the method further includes: establishing a communication tunnel between a second network element and a third network element, where the second network element is a user plane network element for the first PDU session, and the third network element is a user plane network element for the second PDU session.

This manner provides a communication mode in a scenario in which sessions are in different management domains, thereby improving compatibility of the solution with multiple communication scenarios.

In some implementations, the first subnet is created by the NIAF, and the method includes: forming the first subnet from at least two devices based on the intent of the first user, where the at least two devices include a third device and a fourth device, the third device belongs to a second subnet, the fourth device belongs to a third subnet, and the second subnet is different from the third subnet.

In this manner, the NIAF does not create a new subnet between devices in a same subnet to meet requirements of the user, thereby improving user experience.

In some implementations, the method further includes: receiving a second user identifier, where the second user identifier is associated with the first user; and determining, based on the second user identifier, the second subnet and the third subnet that are subscribed to by the first user.

In some implementations, the method further includes: receiving a third user identifier and identity information of the first user, where the third user identifier is associated with a second user; determining, based on the third user identifier, the second subnet subscribed to by the second user; and determining, based on the identity information of the first user, the third subnet subscribed to by the first user.

In some implementations, the method further includes: determining, based on verification information of the third user, that the third device and the fourth device are allowed to form a network.

In some implementations, the method further includes: creating the subscription information of the first subnet, where the subscription information of the first subnet includes the third user identifier of the first device and a fourth user identifier of the fourth device, the fourth user identifier is associated with the first user, or, updating subscription information, so that subscription information of the first device and subscription information of the fourth device include an identifier of the first subnet.

In this manner, new subscription information is created or the subscription information is updated to facilitate subsequent subnet access.

In some implementations, the second information includes an identifier of the first subnet and an identifier of the third device, the identifier of the first subnet is used to establish a third PDU session, and the method further includes: sending third information to a fifth device, where the third information includes the identifier of the first subnet and an identifier of the fourth device, the identifier of the first subnet is used by the fifth device to establish a fourth PDU session, and the fourth device accesses the communication network via the fifth device.

In some implementations, sending the second information to the first device includes: sending the second information to the first device via a first application server, where the first application server is an application server with which the first device is registered; and sending the third information to the fifth device includes: sending the third information to the fifth device via a second application server, where the second application server is an application server with which the fifth device is registered.

In some implementations, the third PDU session and the fourth PDU session are in different management domains, and the method further includes: establishing a communication tunnel between a fourth network element and a fifth network element, where the fourth network element is a user plane network element for the third PDU session, and the fifth network element is a user plane network element for the fourth PDU session.

This manner provides a communication mode after a new subnet is created in a scenario in which sessions are in different management domains, thereby improving compatibility of the solution with multiple communication scenarios.

According to a second aspect, a communication method is provided. The method may be performed by a terminal device (for example, a first device), or may be performed by a module (for example, a chip or a circuit) in the terminal device, or may be performed by a logical node, a logical module, or software that can implement all or some of functions of the terminal device. This is not limited in this application. The method is applied to a first device.

The method includes: sending first information, where the first information describes an intent of a first user; receiving second information, where the second information indicates a first subnet, the first subnet is determined based on the intent of the first user, and the first subnet is determined from at least one subnet, or the first subnet is created by an NIAF; and accessing the first subnet based on the second information.

In the method, an intent of a user indirectly expresses that the first device interacts with a device in a subnet, or a third device that accesses a communication network via the first device interacts with a device in a subnet.

In some implementations, the first subnet is determined from the at least one subnet, the first subnet is a subnet that is of the at least one subnet and that has a same service type as a subnet that the first user requests to access, and the service type of the subnet that the first user requests to access is determined based on the intent of the first user.

In some implementations, the method further includes: sending a first user identifier, where the first user identifier is associated with the first user, the first user identifier is used to determine the at least one subnet, and the at least one subnet is a subnet subscribed to by the first user.

In some implementations, the method further includes: sending a first user identifier, where the first user identifier is associated with the first user, the first user identifier and relationship information between the first user and a second user are used to determine the at least one subnet, the at least one subnet is a subnet subscribed to by the second user, and the intent of the first user includes the relationship information between the first user and the second user.

In some implementations, that the first device is allowed to access the first subnet is determined based on verification information of the second user.

In some implementations, the method further includes: updating subscription information, so that subscription information of the first subnet includes an identifier of the first user, or subscription information of the identifier of the first user includes an identifier of the first subnet.

In some implementations, the second information includes an identifier of the first subnet.

In some implementations, a first PDU session is established based on the identifier of the first subnet.

In some implementations, the first device and a second PDU session that is established by a second device in the first subnet are in different management domains, the first device interacts with the second device via a communication tunnel between a second network element and a third network element, the second network element is a user plane network element for the first PDU session, and the third network element is a user plane network element for the second PDU session.

In some implementations, the first subnet is created by the NIAF, and the first subnet is formed from at least two devices based on the intent of the first user, where the at least two devices include a third device and a fourth device, the third device belongs to a second subnet, the fourth device belongs to a third subnet, and the second subnet is different from the third subnet.

In some implementations, the method further includes: sending a second user identifier, where the second user identifier is associated with the first user, and the second user identifier is used to determine the second subnet and the third subnet that are subscribed to by the first user.

In some implementations, the method further includes: sending a third user identifier and identity information of the first user, where the third user identifier is associated with a second user, the third user identifier is used to determine the second subnet subscribed to by the second user, and the identity information of the first user is used to determine the third subnet subscribed to by the first user.

In some implementations, that the third device and the fourth device are allowed to form a network is determined based on verification information of the second user.

In some implementations, the subscription information of the first subnet includes the third user identifier of the first device and a fourth user identifier of the fourth device, the fourth user identifier is associated with the first user, or, subscription information of the first device and subscription information of the fourth device include an identifier of the first subnet.

In some implementations, the second information is from the NIAF and is forwarded by a first application server, and the first application server is an application server with which the first device is registered.

In some implementations, the second information includes an identifier of the first subnet and an identifier of the second device.

In some implementations, a third PDU session is established based on the identifier of the first subnet.

In some implementations, the first PDU session and a fourth PDU session established by the fourth device are in different management domains, the first device communicates with the fourth device via a communication tunnel between a fourth network element and a fifth network element, the fourth network element is a user plane network element for the third PDU session, and the fifth network element is a user plane network element for the fourth PDU session.

It should be understood that the second aspect is an implementation on the terminal device side corresponding to the first aspect, and explanations, supplementary descriptions, and descriptions of beneficial effects of the first aspect are also applicable to the second aspect. Details are not described again.

According to a third aspect, a communication apparatus is provided. The apparatus may be a network element (for example, an NIAF), or may be a module (for example, a chip or a circuit) in the network element, or may be a logical node, a logical module, or software that can implement all or some of functions of the network element. The apparatus includes: a transceiver unit, configured to receive first information from a first device, where the first information describes an intent of a first user, and second information describes the intent; and a processing unit, configured to determine a first subnet based on the intent of the first user, where the first subnet is determined from at least one subnet, or the first subnet is formed by an NIAF, and the first subnet is used for access by the first device; the transceiver unit being further configured to send the second information to the first device, where the second information indicates the first subnet.

In some implementations, the first subnet is determined from the at least one subnet, and the processing unit is configured to determine, based on the intent of the first user, a service type of a subnet that the first user requests to access, where the first subnet is a subnet that is of the at least one subnet and that has a same service type as the subnet that the first user requests to access.

In some implementations, the transceiver unit is configured to: receive a first user identifier, where the first user identifier is associated with the first user; and determine the at least one subnet based on the first user identifier, where the at least one subnet is a subnet subscribed to by the first user.

In some implementations, the transceiver unit is configured to receive a first user identifier, where the first user identifier is associated with the first user; and the processing unit is configured to: receive the first user identifier, where the first user identifier is associated with the first user; and determine the at least one subnet based on the first user identifier and relationship information between the first user and a second user, where the at least one subnet is a subnet subscribed to by the second user, and the intent of the first user includes the relationship information between the first user and the second user.

In some implementations, the processing unit is configured to determine, based on verification information of the second user, that the first device is allowed to access the first subnet.

In some implementations, the processing unit is configured to update subscription information, so that subscription information of the first subnet includes an identifier of the first user, or subscription information of the identifier of the first user includes an identifier of the first subnet.

In some implementations, the second information includes an identifier of the first subnet.

In some implementations, the identifier of the first subnet is used by the first device to establish a first protocol data unit PDU session, and the first device is a device that sends the intent of the first user.

In some implementations, if the first PDU session and a second PDU session that is established by a second device in the first subnet are in different management domains, the processing unit is configured to establish a communication tunnel between a second network element and a third network element, where the second network element is a user plane network element for the first PDU session, and the third network element is a user plane network element for the second PDU session.

In some implementations, the processing unit is configured to form the first subnet from at least two devices based on the intent of the first user, where the at least two devices include a third device and a fourth device, the third device belongs to a second subnet, the fourth device belongs to a third subnet, and the second subnet is different from the third subnet.

In some implementations, the transceiver unit is configured to receive a second user identifier from the first device, where the second user identifier is associated with the first user; and the processing unit is configured to determine, based on the second user identifier, the second subnet and the third subnet that are subscribed to by the first user.

In some implementations, the transceiver unit is configured to: receive a third user identifier and identity information of the first user from the first device, where the third user identifier is associated with the second user; and determine, based on the second user identifier, the second subnet subscribed to by a third user; and the processing unit is configured to determine, based on the identity information of the first user, the third subnet subscribed to by the first user.

In some implementations, the processing unit is configured to determine, based on verification information of the third user, that the third device and the fourth device are allowed to form a network.

In some implementations, the processing unit is configured to create the subscription information of the first subnet, where the subscription information of the first subnet includes the third user identifier of the first device and a fourth user identifier of the fourth device, the fourth user identifier is associated with the first user, or, update subscription information, so that subscription information of the first device and subscription information of the fourth device include an identifier of the first subnet.

In some implementations, the second information includes an identifier of the first subnet and an identifier of the third device, the identifier of the first subnet is used to establish a third PDU session, and the method further includes: sending third information to a fifth device, where the third information includes the identifier of the first subnet and an identifier of the fourth device, the identifier of the first subnet is used by the fifth device to establish a fourth PDU session, and the fourth device accesses a communication network via the fifth device.

In some implementations, the transceiver unit is configured to: send the second information to the first device via a first application server, where the first application server is an application server with which the first device is registered; and send the third information to the fifth device includes: sending the third information to the fifth device via a second application server, where the second application server is an application server with which the fifth device is registered.

In some implementations, the third PDU session and the fourth PDU session are in different management domains, and the processing unit is configured to establish a communication tunnel between a fourth network element and a fifth network element, where the fourth network element is a user plane network element for the third PDU session, and the fifth network element is a user plane network element for the fourth PDU session.

According to a fourth aspect, a communication apparatus is provided. The apparatus may be a terminal device (for example, a first device), or may be a module (for example, a chip or a circuit) in the terminal device, or may be a logical node, a logical module, or software that can implement all or some of functions of the terminal device. The apparatus includes: a transceiver unit, configured to send first information, where the first information describes an intent of a first user; the transceiver unit being further configured to receive second information, where the second information indicates a first subnet, the first subnet is determined based on the intent of the first user, and the first subnet is determined from at least one subnet, or the first subnet is created by an NIAF; and a processing unit, configured to access the first subnet based on the second information.

In some implementations, the first subnet is determined from the at least one subnet, the first subnet is a subnet that is of the at least one subnet and that has a same service type as a subnet that the first user requests to access, and the service type of the subnet that the first user requests to access is determined based on the intent of the first user.

In some implementations, the transceiver unit is configured to send a first user identifier, where the first user identifier is associated with the first user, the first user identifier is used to determine the at least one subnet, and the at least one subnet is a subnet subscribed to by the first user.

In some implementations, the transceiver unit is configured to send a first user identifier, where the first user identifier is associated with the first user, the first user identifier and relationship information between the first user and a second user are used to determine the at least one subnet, the at least one subnet is a subnet subscribed to by the second user, and the intent of the first user includes the relationship information between the first user and the second user.

In some implementations, that a first device is allowed to access the first subnet is determined based on verification information of the second user.

In some implementations, the processing unit is configured to update subscription information, so that subscription information of the first subnet includes an identifier of the first user, or subscription information of the identifier of the first user includes an identifier of the first subnet.

In some implementations, the second information includes an identifier of the first subnet.

In some implementations, the processing unit is configured to establish a first PDU session based on the identifier of the first subnet.

In some implementations, the first device and a second PDU session that is established by a second device in the first subnet are in different management domains, the first device interacts with the second device via a communication tunnel between a second network element and a third network element, the second network element is a user plane network element for the first PDU session, and the third network element is a user plane network element for the second PDU session.

In some implementations, the first subnet is created by the NIAF, and the first subnet is formed from at least two devices based on the intent of the first user, where the at least two devices include a third device and a fourth device, the third device belongs to a second subnet, the fourth device belongs to a third subnet, and the second subnet is different from the third subnet.

In some implementations, the transceiver unit is configured to send a second user identifier, where the second user identifier is associated with the first user, and the second user identifier is used to determine the second subnet and the third subnet that are subscribed to by the first user.

In some implementations, the transceiver unit is configured to send a third user identifier and identity information of the first user, where the third user identifier is associated with a second user, the second user identifier is used to determine the second subnet subscribed to by a third user, and the identity information of the first user is used to determine the third subnet subscribed to by the first user.

In some implementations, that the third device and the fourth device are allowed to form a network is determined based on verification information of the second user.

In some implementations, the subscription information of the first subnet includes the third user identifier of the first device and a fourth user identifier of the fourth device, the fourth user identifier is associated with the first user, or, subscription information of the first device and subscription information of the fourth device include an identifier of the first subnet.

In some implementations, the second information is from the NIAF and is forwarded by a first application server, and the first application server is an application server with which the first device is registered.

In some implementations, the second information includes an identifier of the first subnet and an identifier of the second device.

In some implementations, the processing unit is configured to establish a third PDU session based on the identifier of the first subnet.

In some implementations, the first PDU session and a fourth PDU session established by the fourth device are in different management domains, the first device communicates with the fourth device via a communication tunnel between a fourth network element and a fifth network element, the fourth network element is a user plane network element for the third PDU session, and the fifth network element is a user plane network element for the fourth PDU session.

It should be understood that the third aspect and the fourth aspect are implementations on the apparatus side corresponding to the first aspect and the second aspect respectively, and explanations, supplementary descriptions, and descriptions of beneficial effects of the first aspect and the second aspect are also applicable to the third aspect and the fourth aspect. Details are not described again.

According to a fifth aspect, a communication apparatus is provided, and includes a processor. The processor is configured to enable, by executing a computer program or instructions, or by using a logic circuit, the communication apparatus to perform the method according to any one of the first aspect and the possible implementations of the first aspect; or the communication apparatus to perform the method according to any one of the second aspect and the possible implementations of the second aspect.

In a possible implementation, the communication apparatus further includes a memory, configured to store the computer program or the instructions.

In a possible implementation, the communication apparatus further includes a communication interface, configured to input and/or output a signal.

According to a sixth aspect, a communication apparatus is provided, and includes a logic circuit and an input/output interface. The input/output interface is configured to input and/or output a signal. The logic circuit is configured to perform the method according to any one of the first aspect and the possible implementations of the first aspect; or the logic circuit is configured to perform the method according to any one of the second aspect and the possible implementations of the second aspect.

According to a seventh aspect, a communication system is provided. The communication system includes the communication apparatus according to any one of the possible implementations of the third aspect, and/or the communication apparatus according to any one of the fourth aspect or the possible implementations of the fourth aspect.

According to an eighth aspect, a computer-readable storage medium is provided. The computer-readable storage medium stores a computer program or instructions. When the computer program or the instructions are executed by a computer, the method according to any one of the first aspect and the possible implementations of the first aspect is performed, or the method according to any one of the second aspect and the possible implementations of the second aspect is performed.

According to a ninth aspect, a computer program product is provided, including instructions. When the instructions are executed by a computer, the method according to any one of the first aspect and the possible implementations of the first aspect is performed, or the method according to any one of the second aspect and the possible implementations of the second aspect is performed.

### BRIEF DESCRIPTION OF DRAWINGS

FIG. 1 is a diagram of a communication architecture;
FIG. 2 is a diagram of an application scenario to which a communication method according to an embodiment of this application is applicable;
FIG. 3 is a diagram of a communication system according to an embodiment of this application;
FIG. 4 is a schematic flowchart of a communication method according to an embodiment of this application;
FIG. 5A is a diagram of a communication system according to an embodiment of this application;
FIG. 5B is a diagram of a communication system according to an embodiment of this application;
FIG. 6A and FIG. 6B are a schematic flowchart of implementing a communication method according to an embodiment of this application;
FIG. 7A and FIG. 7B are a schematic flowchart of implementing another communication method according to an embodiment of this application;
FIG. 8A and FIG. 8B are a schematic flowchart of implementing another communication method according to an embodiment of this application;
FIG. 9A and FIG. 9B are a schematic flowchart of implementing another communication method according to an embodiment of this application;
FIG. 10 is a block diagram of a structure of a communication apparatus according to an embodiment of this application;
FIG. 11 is a block diagram of a structure of another communication apparatus according to an embodiment of this application; and
FIG. 12 is a block diagram of a structure of another communication apparatus according to an embodiment of this application.

### DESCRIPTION OF EMBODIMENTS

The technical solutions in embodiments of this application may be applied to various communication systems, for example, a 5th generation (5th generation, 5G) system, a 6th generation (6th generation, 6G) system, a new radio (new radio, NR) system, or a future communication system.

By way of example, and not limitation, in embodiments of this application, a terminal device in embodiments of this application may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a subscriber unit (subscriber unit), a terminal device station, a terminal device agent, a terminal device apparatus, or a terminal in V2X communication. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, an in-vehicle device, a wearable device, a terminal in a 5G network, a terminal in a 6G network, or a terminal in a future evolved network, or the like. This is not limited in embodiments of this application.

The terminal device in embodiments of this application may alternatively be a mobile phone (mobile phone), a tablet computer (PAD), a computer having a wireless transceiver function, a holographic projector, a video player, a virtual reality (virtual reality, VR) terminal, an augmented reality (augmented reality, AR) terminal, a wireless terminal in industrial control (industrial control), a tactile terminal device, an in-vehicle terminal device, a wireless terminal in self-driving (self-driving), a wireless terminal in telemedicine (telemedicine), a wireless terminal in a smart grid (smart grid), a wireless terminal in transportation safety (transportation safety), a wireless terminal in transportation safety, a wireless terminal in a smart city (smart city), or a wireless terminal in a smart home (smart home).

The wearable device may also be referred to as a wearable intelligent device, and is a generic term for wearable devices such as head-mounted display extended reality (extended reality, XR) glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some functions without depending on smartphones, for example, smart watches or smart glasses, and include devices that are dedicated to one type of application function and that need to collaboratively work with other devices such as smartphones, for example, various smart bands or smart jewelry for monitoring physical signs.

In addition, in embodiments of this application, the terminal device may alternatively be a terminal device in an internet of things (internet of things, IoT) system. IoT is an important part of future development of information technology, and a main technical feature of the IoT is to connect things to a network by using a communication technology, to implement an intelligent network for human-machine interconnection or thing-thing interconnection.

In addition, in this application, the terminal device may further include sensors such as an intelligent printer, a train detector, and a gas station. Main functions include collecting data (some terminal devices), receiving control information and downlink data from a network device, sending an electromagnetic wave, and transmitting uplink data to the network device.

In embodiments of this application, the network device may be a device that is configured to communicate with the terminal device, and the network device may be a base transceiver station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved NodeB, eNB) in an LTE system, or may be a radio controller in a cloud radio access network (cloud radio access network, CRAN) scenario. Alternatively, the network device may be a relay station, an access point, an in-vehicle device, a wearable device, a network device in a 5G or 6G network and a future communication system, a network device in a future evolved PLMN network, or the like, may be an access point (access point, AP) in a WLAN, or may be a gNB in a new radio (new radio, NR) system. This is not limited in embodiments of this application. It may be understood that all or some functions of the network device in this application may alternatively be implemented by using a software function running on hardware, or may be implemented by using an instantiated virtualization function on a platform (for example, a cloud platform).

The foregoing listed functions and specific implementations of the terminal device and the network device are merely examples for description, and this is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and memory (also referred to as main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry an instruction and/or data.

A 6G system adds resources and capabilities in new dimensions such as computing, intelligence, data, and perception based on enhanced connections of a 5G system, and provides platform-based service capabilities instead of a mere pipeline, thereby achieving intelligent connection of everything. However, enhanced evolution based on an existing mobile network protocol system leads to continuous accumulation of complexity of system design and implementation, which is unsustainable. A main reason lies in that an existing network system architecture depends on a definition of a standard signaling process. Complexity of design of the architecture system and the signaling process depends on a quantity of service scenarios, a quantity of service procedures in each scenario, and a quantity of network functions in each service procedure.

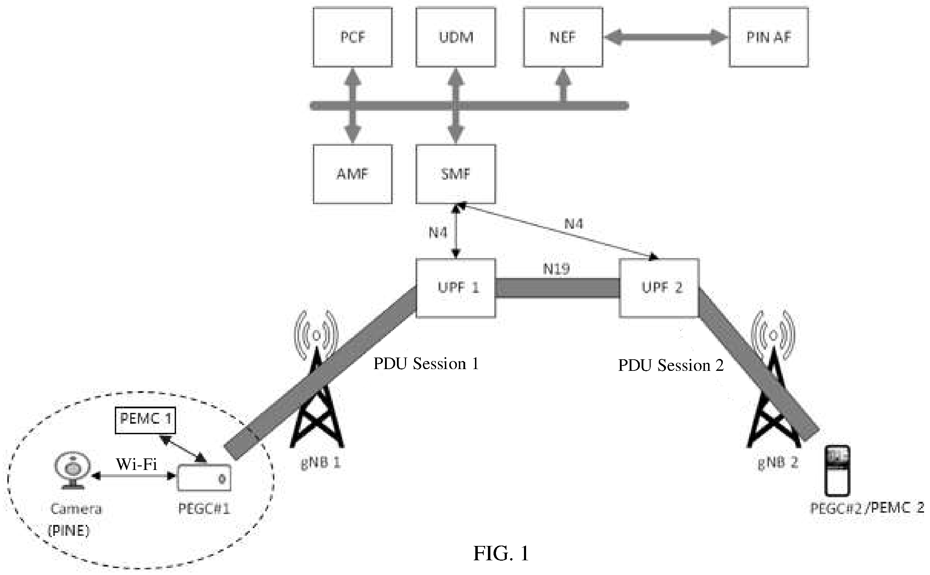

FIG. 1 is a diagram of a 5G local area network (local area network, 5G-LAN)-based personal IoT network (personal IoT network, PIN) device interworking architecture. In the figure, two PIN elements with gateway capability (PIN Elements with Gateway Capability, PEGCs), two PIN elements with management capability (PIN Elements with management capability, PEMCs), and one personal IoT network element (personal IoT network element, PINE) (also referred to as a personal IoT member) belong to a same PIN. The PEGCs are 3GPP UEs that can access a 5G network. The PEMCs are used to manage a local network and register the PEGCs and the PINE with a PIN agent function (agent function, AF). The PIN can interwork with other PINEs within the local network or interwork with the 5G network through the PEGCs. The PIN AF requests unified data management (unified data management, UDM) based on the registration of the PEMCs through network equipment functions (network equipment functions, NEF) to create a 5G virtual network group (virtual network group, VN Group). A request message includes UE IDs of the registered PEGCs. The UDM creates a 5G VN group based on a request and saves subscription information of the 5G VN group, including an identifier (an External Group ID and an Internal Group ID) of the 5G VN group and members of the 5G VN group, that is, subscriber identifiers (a subscription permanent identifier (Subscription permanent identifier, SUPI) and a generic public subscription identifier (generic public subscription identifier, GPSI)) of the PEGCs, and data information (a protocol data unit session (protocol data unit session, PDU session) type, a data network name (data network name, DNN), a single network slice selection assistance information (single network slice selection assistance information, S-NSSAI), and the like) of the 5G VN group. After the PEGCs are registered with the network, a PCF authorizes a UE policy (Policy) for the UEs based on subscription parameters of the 5G VN group to indicate the UEs to establish a PDU session. The PEGCs request to establish a PDU session based on the UE policy (parameters include a PDU session type, a DNN, and an S-NSSAI). When a plurality of PEGCs belong to a same network management domain, a same service management function (service management function, SMF) is usually selected for PDU sessions of different PEGCs. The SMF selects a same UPF for the PDU sessions based on parameters of the PDU sessions. The SMF further configures a user plane function (user plane function, UPF), so that data between PEGCs is locally exchanged in the UPF. PEGC#2 may communicate with a camera (Camera) via 5GC.

Currently, all network elements in the PIN need to be registered with the AF, and the AF is required to manage a PIN network. That is, devices in the PIN network need to support an application layer protocol of the AF. As a result, devices in different scenarios cannot communicate with each other. For user experience, a user needs to have specialized knowledge to create a network, which is not user-friendly. For example, a user may simply want to use a mobile phone to control a camera to check on the home, and the user needs to first learn how to create a network between devices. This increases difficulty in using the devices by the user.

In view of this, a communication system provided in embodiments of this application creates a network for a user based on an intent of the user, and a networking manner may not depend on a third-party application, thereby making it easier for a user to use devices to create a network.

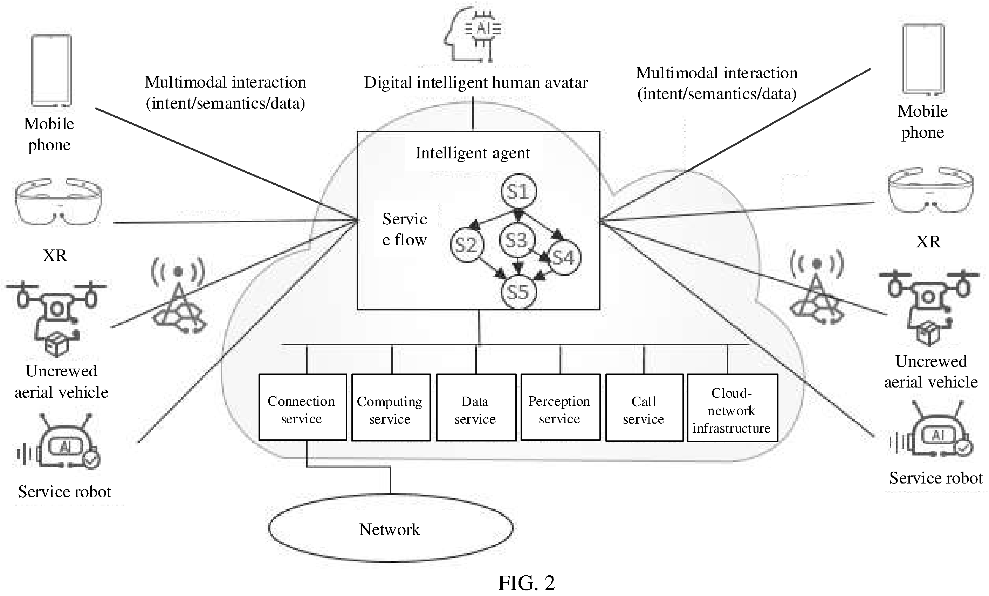

FIG. 2 is a diagram of an application scenario to which a communication method according to an embodiment of this application is applicable. As shown in FIG. 2, a user-centric, intent-driven communication system is used. Based on an intent sent by a user using a terminal device, the system drives multimodal information interaction between human, machine, digital entity, and intelligent entity, and translates the intent of the user into a specific service flow using native capabilities such as communication, sensing, computing, data, and intelligence of an intelligent agent, to directly invoke or indirectly drive capabilities of various objects to fulfill the intent of the user.

The "human" in the foregoing intent-driven communication scenario may be a terminal device of the user, for example, a mobile phone shown in FIG. 2, or another terminal device that can send the intent of the user, including but not limited to a tablet computer, a computer with a wireless transceiver function, a smartwatch, and the like. This is not specifically limited in this application.

The "machine" in the foregoing intent-driven communication scenario may be a machine, that is, a type of terminal device that has a specific function or can complete a specific task, for example, an XR device or an uncrewed aerial vehicle shown in FIG. 2, or another terminal device that has a specific function or can complete a specific task, including but not limited to an in-vehicle terminal device, a wireless terminal in a smart home, a terminal device in an internet of things system, and the like. This is not specifically limited in this application.

The "digital entity" in the foregoing intent-driven communication scenario may be a digital human or a digital intelligent human. The digital human or the digital intelligent human is a digital virtual image created based on a computer graphics (computer graphics, CG) technology and an artificial intelligence technology, has a human appearance or behavior pattern, and can perform intelligent speech interaction, visual recognition, emotional experience, and the like. For example, a digital intelligent human avatar shown in FIG. 2 is used.

The "intelligent entity" in the foregoing intent-driven communication scenario may refer to a type of entity having autonomous or semi-autonomous intelligence. The entity may include a physical device, for example, a service robot shown in FIG. 2, or another terminal device having autonomous or semi-autonomous intelligence, including but not limited to a robot or a robotic dog. The entity may alternatively include a virtual entity, for example, an intelligent agent in a network. The intelligent agent can identify and understand an intent and semantics of a physical communication object and/or a virtual communication object, implement efficient intent and semantic interaction and transfer between communication objects, and can assist in completing task processing.

An artificial intelligence agent (AI Agent) is an entity based on an artificial intelligence AI technology, for example, a digital human or a digital intelligent human corresponding to the "digital entity" in the foregoing description, or a virtual entity included in the "intelligent entity" in the foregoing description. Different types of terminal devices include but are not limited to terminal devices corresponding to the "human", "machine", and "intelligent entity" in the foregoing description.

The "intent" in this embodiment of this application is an expected result of a target object. The intent includes but is not limited to the following information: an intent expectation, an intent object, an intent target, and intent context. The intent expectation is a service scenario to which an intent is directed, for example, entrusting a digital human to perform a task on behalf of a user, intelligently driving a terminal device, extending a computing capability of the terminal device, and creating a virtual network for a machine group. The intent object refers to a target object to which the intent is directed, for example, a terminal device, a base station, a virtual private network, a call application, a computing service, and a third-party application. The intent target is a target value that needs to be reached by a performance indicator, for example, a throughput, a delay, and a handover success rate. The intent context is a constraint expressed through relationships such as comparison, inclusion, and association, and is, for example, duration of the intent and a priority of the intent. A description form of the intent includes but is not limited to a natural language, a formatted intent expression model, and the like. This is not specifically limited in this application.

The "service flow" described in this embodiment of this application is a specific information interaction procedure between an intelligent agent and an object and/or between a plurality of objects required for completing a specific service in a specific service scenario, that is, a specific implementation of an intent. Based on a type of an information receiver and a degree of autonomous intelligence, information of the interaction may include specific signaling, or may include a task scheduling policy, or may include an intent. The "service flow" in this application is also referred to as a "service".

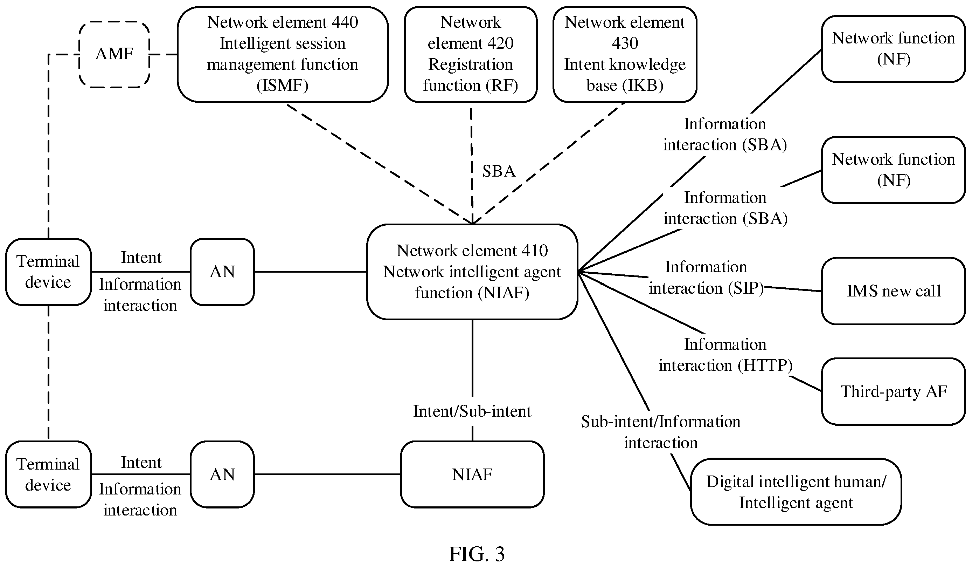

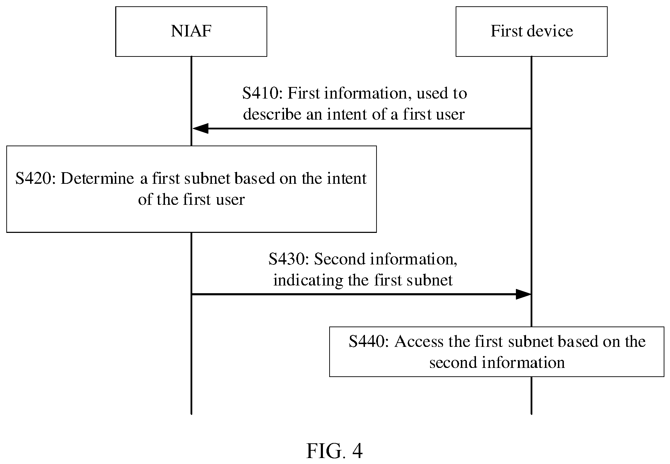

The following describes in detail, with reference to FIG. 3, a communication system 300 provided in an embodiment of this application. As shown in FIG. 4, the system 300 includes a network element 310, and the network element 310 may be a network intelligent agent function (network intelligent agent function, NIAF). The NIAF is an implementation of the intelligent agent described above, and is configured to receive and identify an intent (or an intent sent by a terminal device via an access network (access network, AN)) from a terminal device (for example, an intelligent terminal device), and translate the intent into a specific information interaction method, to directly invoke or indirectly drive capabilities of various objects to eventually fulfill the intent sent by a user via the terminal device. As described above, these objects include but are not limited to another NF or MF, an intelligent agent (for example, a digital intelligent human), a call application (for example, an IMS new call), a third-party AF, and different types of terminal devices.

The network element 310 may alternatively map the intent into an information interaction method based on a local intent knowledge base. The network element 310 may further have an interaction interface. The interaction interface may be configured to receive an intent, or may be configured to interact with another type of information, or may be configured to forward an intent or a sub-intent of an intent to another device. It should be understood that composition and a working procedure of the network element 310 are merely examples for description, and an internal design of the network element 310 is not specifically limited in this application.

Optionally, the communication system 300 may further include a network element 330, and the network element 330 may be a session management function (session management function, SMF). Various types of terminal devices, including but not limited to a mobile phone, XR glasses, an internet of things terminal, an uncrewed aerial vehicle, a robotic dog, and a robot, may establish a session with the network element 310 via the network element 330. In this embodiment of this application, a session established between the NIAF and a terminal device may be referred to as an intelligent session. The intelligent session is used to implement intent interaction between the terminal device and the network element 310, and/or is used to implement information interaction between the network element 310 and the terminal device required for fulfilling an intent, including but not limited to semantic information that is sent by the terminal device to the network element 310 and that is used to express an intent, an intent sent by the network element 310 to an intelligent terminal device that can identify and fulfill an intent, specific signaling used by the network element 310 to control the terminal device, and multimodal data (such as sensing data, image data, and audio and video data) received or acquired by the network element 310 from the terminal device. The terminal device may address the network element 330 via another network element (for example, an access and mobility management function (access and mobility management function, AMF) network element), or may be directly connected to the network element 330. This is not specifically limited in this application. The communication system 300 may further include another network element, for example, a policy control function (policy control function, PCF), UDM, an NEF, and a UPF.

The following describes in detail a communication method provided based on the foregoing communication system in embodiments of this application. FIG. 4 is a schematic flowchart of a communication method 400 according to an embodiment of this application. Optionally, the method shown in FIG. 4 may be applied to the communication system 300 shown in FIG. 3.

In this embodiment, an example in which a network element and a terminal device are used as execution bodies of interaction is used to describe the method. However, the execution bodies of the interaction are not limited in this application. For example, a network element in FIG. 4 may alternatively be a chip, a chip system, or a processor that supports the method that can be implemented by the network element, or may be a logical module or software that can implement all or some of functions of the network element; and the terminal device in FIG. 4 may alternatively be a chip, a chip system, or a processor that supports the method that can be implemented by the terminal device, or may be a logical module or software that can implement all or some functions of the terminal device.

The following uses an example in which an NIAF is used as the network element and an example in which a first device is used as the terminal device for description.

It should be understood that a specific type of the terminal device is not limited in this embodiment of this application. For example, the terminal device may be UE, or may be another type of terminal device. This is not specifically limited in this application.

As shown in FIG. 4, the method includes the following steps.

S410: Device#A sends first information to the NIAF, and correspondingly, the NIAF receives the first information.

Device#A is an example of the first device.

The first information describes an intent of a first user. Therefore, the first information may also be referred to as an intent description. The intent description may be a natural language description, for example, a text, a speech, or an image in a natural language, or may be a formatted intent expression model, for example, an intent expression model defined by an intent-driven management service (intent-driven management service, IDMS) of the 3rd generation partnership project (3rd generation partnership project, 3GPP) management standards working group SA5.

The first information may be included in an intent request message sent by Device#A to the NIAF, and the intent request message is used to request to fulfill the intent described by the first information. Optionally, the intent request message may further include other information, for example, an SUPI, used to enable the NIAF or another entity in the system to determine an identity of Device#A that sends the information.

Optionally, the intent request message may further carry an attachment including but not limited to a picture, a text, a speech, a video, a binary code file, an application (application, APP) installation package, to extend or supplement content of the intent description.

Optionally, the NIAF may interact with Device#A a plurality of times to confirm a specific intent of Device#A. For example, the NIAF may request Device#A to supplement detailed information of the intent description, or the NIAF may send the identified intent to Device#A to confirm whether the intent is correctly identified. The attachment may alternatively be provided during a plurality of confirmation interactions of the intent. The intent of the user indirectly expresses that the first device needs to interact with a device in a subnet, or another device that is accessed via the first device needs to interact with a device in a subnet. For example, the intent of the user is "I want to view the family photos stored on the NAS at home" or "I want to use the rear-seat PAD to watch the movies stored on the NAS at home". The user connects the first device to a home network without sending an explicit instruction via the first device.

S420: The NIAF determines a first subnet based on the intent of the first user.

This step includes two manners of determining the first subnet, which are separately described below.

Manner 1: The NIAF determines the first subnet from at least one subnet based on the intent of the first user.

In other words, the NIAF selects the first subnet from the at least one subnet.

In this embodiment of this application, different subnets may handle different types of services. For example, service types can be classified into an entertainment service and a work service. For example, a subnet A is used for work (that is, a service type corresponding to the subnet A is work), and a subnet B is used for entertainment (that is, a service type corresponding to the subnet B is entertainment). A network assigns different identifiers to subnets corresponding to different service types. For example, the network assigns an identifier 1 to the subnet A, and the network assigns an identifier 2 to the subnet B. It should be understood that, before using a subnet, the user needs to subscribe to a subnet service (for example, a PIN service) of an operator. Specifically, identifiers of subnets may be represented using DNNs and S-NSSAIs.

The NIAF determines, based on the intent of the first user, a service type of a subnet that the first user requests to access, and further determines the first subnet from the at least one subnet based on the service type. For example, in the at least one subnet, the NIAF uses, as the first subnet, a subnet that has a same service type as the subnet that the first user requests to access. For example, there are three subnets, a service type corresponding to a subnet 1 is work, a service type corresponding to a subnet 2 is entertainment, and a service type corresponding to a subnet 3 is study. The intent of the first user is work, that is, the service type of the subnet that the first user requests to access is work, and the subnet 1 is further determined as the first subnet.

In a possible case 1, the at least one subnet is a subnet subscribed to by the first user. Device#A sends a first user identifier to the NIAF. The first user identifier is associated with the first user. The NIAF may determine, based on the first user identifier, the subnet subscribed to by the first user, and further determine the at least one subnet. That is, the NIAF determines the at least one subnet based on the first user, and further determines the first subnet from these subnets.

In another possible case 2, the at least one subnet is a subnet subscribed to by a second user. Device#A sends a first user identifier to the NIAF. The first user identifier is associated with the first user. The intent of the first user includes relationship information between the first user and the second user. The NIAF determines, based on the first user identifier and the relationship information, the subnet subscribed to by the second user, to determine the at least one subnet. For example, the relationship information may be a family relationship. For example, the first user and the second user belong to a same family. That is, the NIAF determines the at least one subnet based on the second user associated with the first user, and further determines the first subnet from these subnets.

The at least one subnet may be the subnet subscribed to by the first user or the second user, or may be some of the subnets subscribed to by the first user or the second user. This is not limited in this embodiment of this application.

Further, in the case 2, in a possible implementation, the NIAF determines, based on verification information of the second user, Device#A is allowed to access the first subnet. In other words, the NIAF determines, based on the verification information of the second user, whether Device#A is allowed to access the first subnet. For example, the NIAF may contact a digital intelligent human avatar of the second user or the second user (for example, by sending a confirmation SMS message) to confirm whether the first user is allowed to access the first subnet.

The NIAF may further update subscription information. For example, the NIAF may update subscription information of the first subnet, for example, enable the subscription information of the first subnet to include an identifier of the first user. Alternatively, the NIAF may update subscription information of the identifier of the first user, for example, enable the subscription information of the identifier of the first user to include an identifier of the first subnet. Therefore, the first user can successfully access the first subnet.

The identifier of the first subnet may be used to establish a first PDU session. For example, Device#A establishes the first PDU session based on the identifier of the first subnet. Specifically, a DNN and an S-NSSAI of the first PDU session are the identifier of the first subnet. If the first PDU session and a second PDU session are in different management domains, the NIAF may establish a communication tunnel between a second network element and a third network element, where the second network element is a user plane network element for the first PDU session, and the third network element is a user plane network element for the second PDU session. Device#B (an example of a second device) is a device belonging to the first subnet. Therefore, Device#A and Device#B that are located in different management domains may establish communication via the communication tunnel.

Manner 2: The NIAF forms the first subnet based on the intent of the first user.

For example, the NIAF forms the first subnet from at least two devices based on the intent of the first user, and the at least two devices include Device#C (an example of a third device) and Device#E (an example of a fourth device).

Optionally, Device#A and Device#C belong to a second subnet, and Device#D (an example of a fifth device) and Device#E belong to a third subnet. Device#C accesses a communication network via Device#A, and Device#E accesses the communication network via Device#D. That is, the NIAF forms, based on the intent of the first user, a new subnet from devices located in two different subnets.

In a possible implementation 1, the NIAF receives a second user identifier from Device#A. The second user identifier is associated with the first user. The NIAF determines, based on the second user identifier, a subnet subscribed to by the first user, for example, the second subnet and the third subnet. In other words, the second subnet and the third subnet are both subnets subscribed to by the first user.

In another possible implementation 2, the NIAF receives a third user identifier and identity information of the first user from Device#A. The third user identifier is associated with the second user. The NIAF determines, based on the third user identifier, the second subnet subscribed to by the second user, and determines, based on the identity information of the first user, the third subnet subscribed to by the first user. That is, the second subnet and the third subnet are subnets subscribed to by different users.

In the implementation 2, the NIAF may determine, based on verification information of a third user, that Device#C and Device#E are allowed to form a network. In other words, the NIAF determines, based on the verification information of the third user, whether Device#C and Device#E are allowed to form a network. For example, Device#C is an in-vehicle device, and Device#E is a home device of the third user. The NIAF contacts a digital intelligent human avatar of the third user or the third user (for example, by sending a confirmation SMS message) to confirm whether the first user is allowed to form a network from the in-vehicle device and the home device of the third user. The in-vehicle device may be an in-vehicle device of the third user, or may be an in-vehicle device of another user. This is not limited herein.

Further, the NIAF may create subscription information of the first subnet, so that the subscription information of the first subnet includes the third user identifier and a fourth user identifier, and the fourth user identifier is associated with the first user. Alternatively, the NIAF updates the subscription information, so that subscription information of Device#A and subscription information of Device#D include an identifier of the first subnet. In this way, the first user can successfully access the newly created first subnet.

The identifier of the first subnet may be used by Device#A to establish a third PDU session, or may be used by Device#D to establish a fourth PDU session. When the third PDU session and the fourth PDU session are in different management domains, the NIAF may establish a communication tunnel between a fourth network element and a fifth network element. The fourth network element is a user plane network element for the third PDU session, and the fifth network element is a user plane network element for the fourth PDU session. Therefore, Device#A and Device#D may establish communication via the communication tunnel.

S430: The NIAF sends second information to Device#A, and correspondingly, Device#A receives the second information.

The second information indicates the first subnet.

Corresponding to the manner 1 in S420, the second information may include the identifier of the first subnet.

Corresponding to the manner 2 in S420, the second information may include the identifier of the first subnet and an identifier of Device#C. That is, the second information includes the identifier of the first subnet and an identifier of a device joining the first subnet.

Optionally, the NIAF may further send third information to Device#D. The third information includes the identifier of the first subnet and an identifier of Device#E.

In a possible implementation, the NIAF may send information to Device#A or Device#D via another server. For example, the NIAF sends the second information to Device#A via a first application server, and the first application server is an application server with which Device#A is registered. The NIAF sends the third information to Device#D via a second application server, where the second application server is an application server with which Device#D is registered.

S440: Device#A accesses the first subnet based on the second information.

For example, the second information is a combination of a DNN and an S-NSSAI. Device#A establishes a PDU session corresponding to the combination of the DNN and the S-NSSAI to access a 5G network. The 5G network connects Device#A to the first subnet. Therefore, Device#A and Device#C can communicate with another device in the first subnet.

In the method, the NIAF identifies an intent of a user, and determines that the user requests to connect a terminal device to a subnet or determines that the user requests to use devices in two subnets to create a new subnet, thereby fulfilling the intent of the user. The network creates a network for the user based on the intent of the user, which reduces difficulty in using devices to create a network by the user, thereby improving user experience.

The foregoing describes the communication method provided in this embodiment of this application. The following further describes the solutions in embodiments of this application with reference to specific implementation examples.

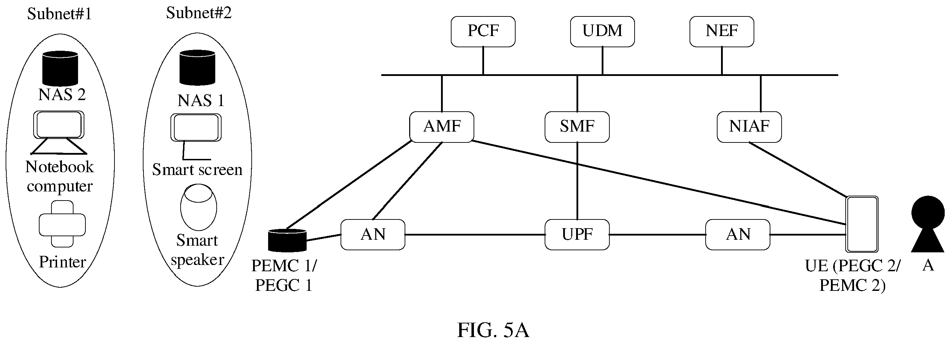

First, two communication architectures are described. A communication architecture is shown in FIG. 5A. Two subnets (Subnet#1, Subnet#2) are preconfigured in a home network of a user. Subnet#1 is used for work and includes terminal devices such as a network attached storage (network attached storage, NAS) 2, a printer, and a notebook computer. Subnet#2 is used for entertainment and includes terminal devices such as a smart speaker, a NAS 1, and a smart screen. A user A (that is, an example of a first user) requests to access the home network.

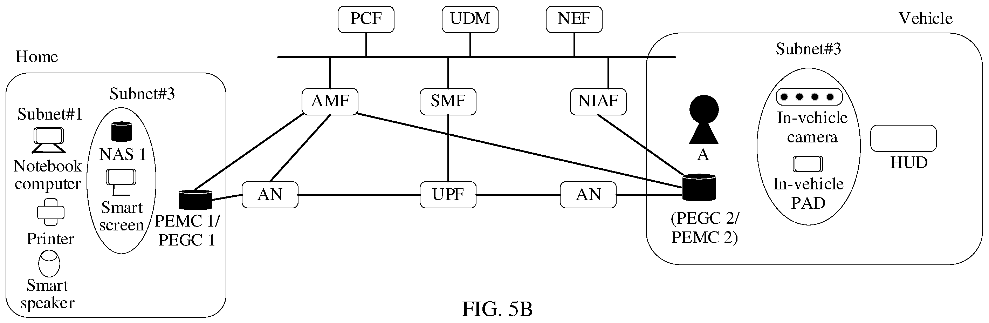

Another communication architecture is shown in FIG. 5B. A subnet (Subnet#1) is preconfigured in a home network of a user, and a subnet (Subnet#2) is preconfigured in an in-vehicle network. The user A requests to use the NAS and a smart screen in Subnet#1 and an in-vehicle camera and an in-vehicle PAD in Subnet#2 to form a new subnet.

In a possible implementation 1, the user A sends an intent to an NIAF via a user interface of a mobile phone: I want to view the family photos stored on the NAS at home. The intent indicates that the user A is a family member of the family, and the family photos are stored in a subnet for entertainment. The user A's mobile phone and the home network are in a same management domain (that is, a PDU session established by a PEGC 1 accessing a 5G network and a PDU session established by UE accessing the 5G network are managed by a same SMF or a same SMF set). In this implementation, the NIAF may assist, based on the user A's intent request, the user A's UE in accessing a corresponding subnet. Because the UE and the subnet are in the same management domain, a same SMF is responsible for managing PDU session establishment of the UE and a PEGC of the subnet. It should be understood that this implementation is an example of the manner 1 in S420. For details, refer to the description in S420. Details are not described again. This implementation is applicable to the communication architecture shown in FIG. 5A.

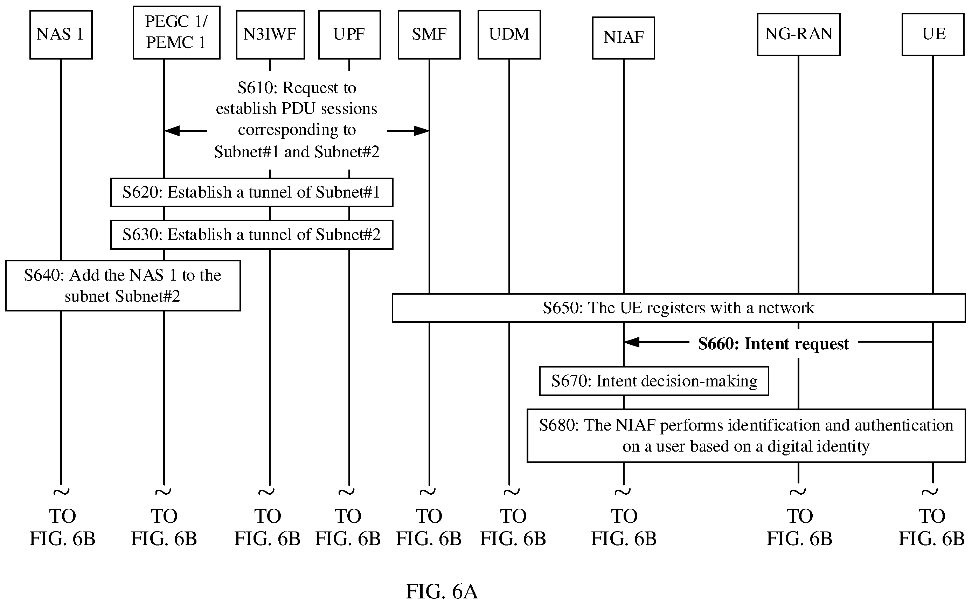

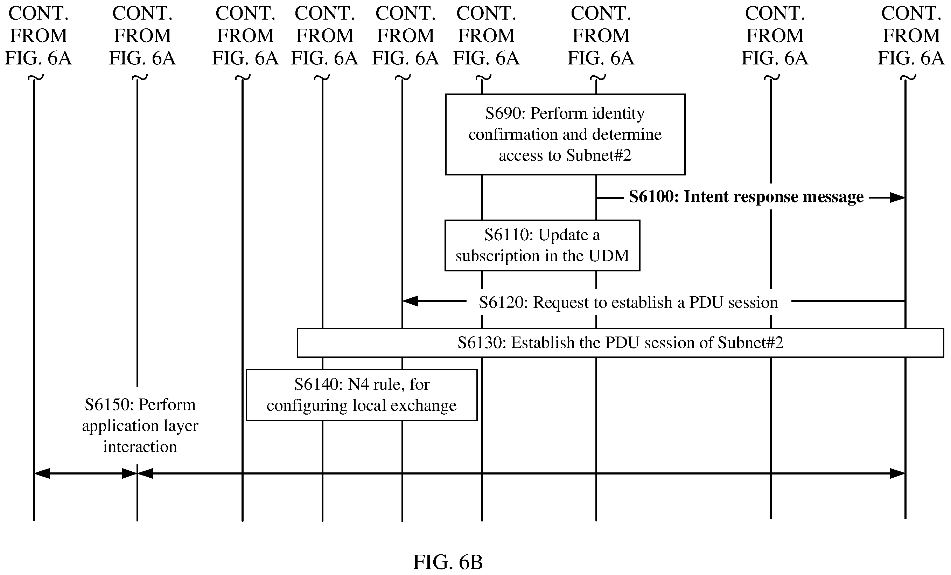

Specifically, with reference to FIG. 6A and FIG. 6B, the implementation includes the following steps:
S610: A user M (an example of a first user or a second user) requests to establish PDU sessions corresponding to Subnet#1 and Subnet#2.
   Subnet#1 and Subnet#2 are examples of at least one subnet. The user M has subscribed to two subnet services (for example, a PIN service) of an operator. Subnet#1 is used for work, and Subnet#2 is used for entertainment. An identifier assigned by the network to Subnet#1 is (an S-NSSAI 1, a DNN 1), and an identifier assigned by the network to Subnet#2 is (an S-NSSAI 2, a DNN 2). A user identifier of a PEGC 1 is an SUPI 1. After the gateway PEGC 1 is activated, the PEGC 1 may interact with the network based on a configuration to request to establish the PDU sessions corresponding to Subnet#1 and Subnet#2. Specifically, the PEGC 1 sends a PDU session establishment request message to the network, where the message carries (the S-NSSAI 1, the DNN 1) and (the S-NSSAI 2, the DNN 2). The SMF selects a UPF based on (the S-NSSAI 1, the DNN 1) and (the S-NSSAI 2, the DNN 2).
S620: The PEGC 1 establishes a tunnel of Subnet#1 with the UPF.
S630: The PEGC 1 establishes a tunnel of Subnet#2 with the UPF.
S640: Add the NAS 1 to the subnet Subnet#2.
   For example, after the NAS 1 storing the family photos is activated, the NAS 1 is added to the subnet Subnet#2 based on a configuration of a PEMC 1.
S650: The UE registers with the network.

Optionally, the UE may further establish a PDU session. The PDU session is used for interaction between the UE and the NIAF.

S660: The user A sends the intent request to the NIAF via the UE (a PEGC 2).

A user identifier of the UE is an SUPI 2. The user A and the user M may be the same user or may be different users. The UE may send the intent to the NIAF through a control plane message, or may send the intent through a user plane. For details, refer to the description in S410. Details are not described again. For example, the user A's intent is to view the family photos.

S670: The NIAF performs intent decision-making.

That is, the NIAF determines, based on the user A's intent request, that the user A requests to access the home network.

S680: The NIAF performs identification and authentication on the user based on a digital identity.

For example, the NIAF performs identification and authentication based on the SUPI 2, a received image (for example, obtained using a camera of the mobile phone) or speech (for example, obtained using a microphone of the mobile phone), and the user A's digital identity in the network.

S690: The NIAF performs identity confirmation and determines access to Subnet#2.

In a possible manner, if the user A and the user M are the same user, when the identification and authentication succeed, the NIAF requests, from a UDM, subscription information of a subnet service subscribed to by the user A.

In another possible manner, if the user A and the user M are not the same user, the NIAF queries the user A's digital human avatar in the network, determines the user A's family members (the family members include the user M), and obtains a subscription of a subnet from the UDM based on an identity of the family member M. That is, relationship information between the user A and the user M is a family relationship. The NIAF contacts a digital intelligent human avatar of the user M or the user M (for example, by sending a confirmation SMS message) to confirm whether the user A is allowed to access the home network.

After the NIAF obtains the subscription of the subnet from the UDM, because the user A's intent is to view the family photos, the NIAF determines that the user A requests to access Subnet#2.

S6100: The NIAF returns an intent response message to the UE.

The intent response message includes an indication for triggering PDU session establishment and the identifier (the S-NSSAI 2, the DNN 2) of Subnet#2.

S6110: The NIAF updates the subscription in the UDM.

In other words, the subscription information of the subnet Subnet#2 includes the SUPI 2, or the subscription information in the SUP 2 includes the S-NSSAI 2 and the DNN 2.

S6120: The UE sends, to the SMF, a message for requesting to establish a PDU session, and correspondingly, the SMF receives the message for requesting to establish a PDU session.

The message includes the S-NSSAI 2 and the DNN 2. The SMF may obtain the subscription information from the UDM, accept a request from the UE, and select a UPF for a PDU session.

S6130: The UE establishes the PDU session of Subnet#2 with the UPF.

S6140: The SMF sends an N4 rule to the UPF for configuring local exchange.

Data packets of the UE and the NAS 1 are locally exchanged at the UPF.

S6150: Perform application layer interaction.

That is, the user A searches for the NAS 1 through the UE and views the family photos stored on the NAS 1.

In a possible implementation 2, the user A sends an intent to an NIAF via a user interface of a mobile phone: I want to view the family photos stored on the NAS of the grandmother's home. The grandmother's home and the user A's UE are not in a same management domain. The user A's mobile phone and the grandmother's home network are not in the same management domain. (That is, a PDU session established by a PEGC 1 accessing a 5G network and a PDU session established by the UE accessing the 5G network are managed by different SMFs or different SMF sets). In this implementation, the NIAF may assist, based on the user A's intent request, the user A's UE in accessing the grandmother's corresponding subnet. It should be understood that this implementation is an example in which the first PDU session and the second PDU session are in different management domains in the manner 1 in S420. For details, refer to the description in S420. Details are not described again. This implementation is applicable to the communication architecture shown in FIG. 5A.

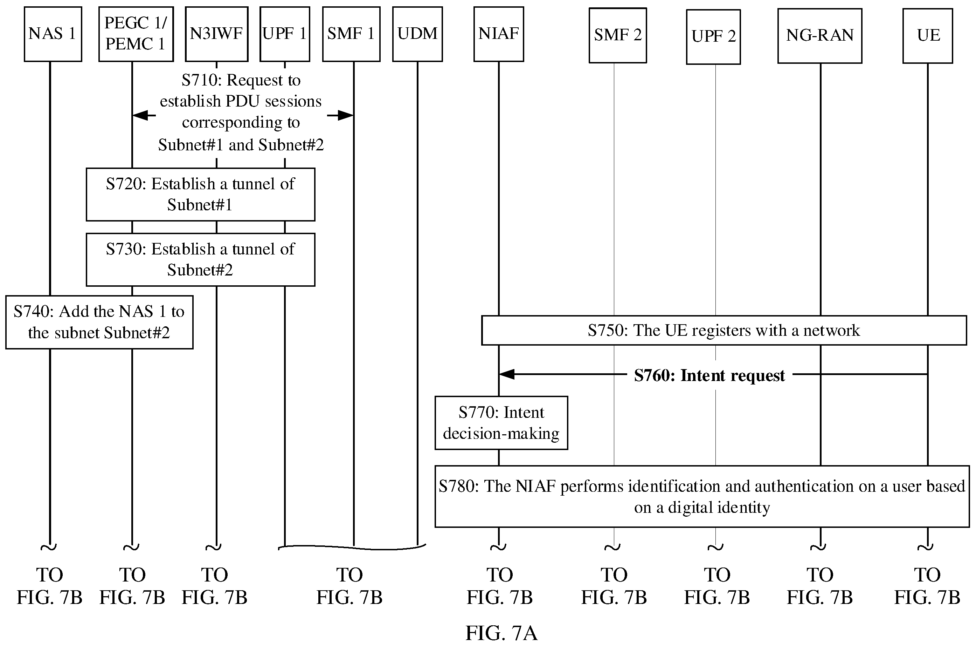

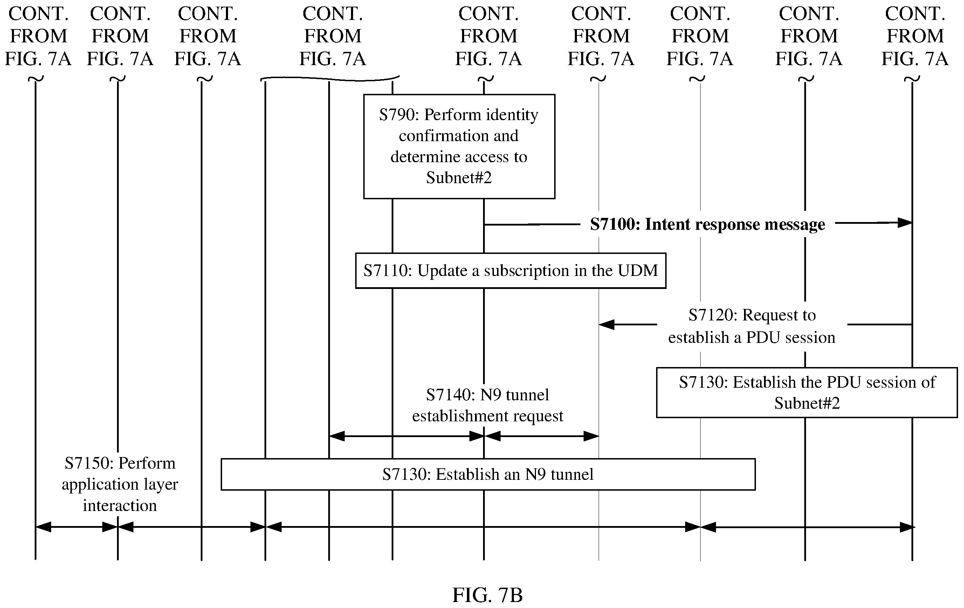

Specifically, with reference to FIG. 7A and FIG. 7B, the implementation includes the following steps:
S710: A user M requests to establish PDU sessions corresponding to Subnet#1 and Subnet#2.
   The user M (A's grandmother, that is, an example of a second user) subscribes to two subnet services (such as a PIN service) of an operator. Subnet#1 is used for work, and Subnet#2 is used for entertainment. An identifier assigned by the network to Subnet#1 is (an S-NSSAI 1, a DNN 1), and an identifier assigned by the network to Subnet#2 is (an S-NSSAI 2, a DNN 2). A user identifier of a PEGC 1 is an SUPI 1. After the gateway PEGC 1 is activated, the PEGC 1 may interact with the network based on a configuration to request to establish the PDU sessions corresponding to Subnet#1 and Subnet#2. Specifically, the PEGC 1 sends a PDU session establishment request message to the network, where the message carries (the S-NSSAI 1, the DNN 1) and (the S-NSSAI 2, the DNN 2). An SMF 1 selects a UPF 1 based on (the S-NSSAI 1, the DNN 1) and (the S-NSSAI 2, the DNN 2).
S720: The PEGC 1 establishes a tunnel of Subnet#1 with the UPF.
S730: The PEGC 1 establishes a tunnel of Subnet#2 with the UPF.
S740: Add the NAS 1 (that is, an example of Device#B) to the subnet Subnet#2.
   For example, after the NAS 1 storing the family photos is activated, the NAS 1 is added to the subnet Subnet#2 based on a configuration of a PEMC 1.
S750: The UE registers with the network.
   Optionally, the UE may further establish a PDU session. The PDU session is used for interaction between the UE and the NIAF.
S760: The user A sends the intent to the NIAF via the UE (a PEGC 2).
   A user identifier of the UE is an SUPI 2. The user A and the user M (the grandmother) are not the same user. The UE may send the intent to the NIAF through a control plane message, or may send the intent through a user plane. For details, refer to the description in S410. Details are not described again. For example, the user A's intent is to view the family photos.
S770: The NIAF performs intent decision-making.
   That is, the NIAF determines, based on the user A's intent request, that the user A wants to access the grandmother's home subnet.
S780: The NIAF performs identification and authentication on the user based on a digital identity.
   For example, the NIAF performs identification and authentication based on the SUPI 2, a received image (for example, obtained using a camera of the mobile phone) or speech (for example, obtained using a microphone of the mobile phone), and the user A's digital identity in the network.
S790: The NIAF performs identity confirmation and determines access to Subnet#2.

In a possible manner, if the identification and authentication succeed, the NIAF determines, based on the user A's digital human avatar in the network, an identity being the user A's grandmother, and the NIAF contacts a digital intelligent human avatar of the user A's grandmother or the user A's grandmother (for example, by sending a confirmation SMS message) to confirm whether the user A is allowed to access the home network. If the user A is allowed to access the home network, subscription information of the grandmother's subnet is obtained from a UDM.

After the NIAF obtains a subscription of the subnet from the UDM, based on the user A's intent being to view the family photos, the NIAF determines that the user A requests to access Subnet#2.

S7100: The NIAF returns an intent response message to the UE.

The message includes an indication for triggering PDU session establishment and the identifier (the S-NSSAI 2, the DNN 2) of Subnet#2.

S7110: The NIAF updates the subscription in the UDM.

In other words, the subscription information of the subnet Subnet#2 includes the SUPI 2, or the subscription information in the SUP 2 includes the S-NSSAI 2 and the DNN 2.

S7120: The UE sends, to an SMF 2, a message for requesting to establish a PDU session.

The message includes the S-NSSAI 2 and the DNN 2. The SMF 2 may obtain the subscription information from the UDM, accept a request from the UE, and select a UPF 2 for a PDU session.

S7130: The UE establishes a PDU session of Subnet#2 with the UPF 2.

S7140: The NIAF separately initiates an N9 tunnel establishment request to the SMF 1 and the SMF 2.

For example, the NIAF separately interacts with the SMF 1 and the SMF 2 to establish an N9 tunnel between the UPF 1 and the UPF 2. Data packets of the UE and the NAS 1 may be exchanged through the N9 tunnel between the UPF 1 and the UPF 2.

S7150: Establish the N9 tunnel between the UPF 1 and the UPF 2.

S7160: Perform application layer interaction.

That is, the user A searches for the NAS 1 through the UE and views the family photos stored on the NAS 1.

In a possible implementation 3, the user A sends an intent to an NIAF via a user interface of an in-vehicle terminal: (1) Have family members view, on the smart screen, pictures shot by the in-vehicle camera. (2) Play Movie#1 on the NAS using the rear-seat PAD. The in-vehicle terminal and the home network are in a same management domain. In this implementation, the NIAF may assist, based on the user A's intent request, the in-vehicle camera and the PAD in the in-vehicle network and the smart screen and the NAS in the home network to form a same subnet. Because the in-vehicle subnet and the home subnet are in the same management domain, a same SMF is responsible for managing PDU session establishment of a PEGC of the in-vehicle subnet and a PEGC of the home subnet. In addition, devices in the home network and the in-vehicle network are all registered with application functions provided by the operator. It should be understood that this implementation is an example of the manner 2 in S420. For details, refer to the description in S420. Details are not described again. This implementation is applicable to the communication architecture shown in FIG. 5B.

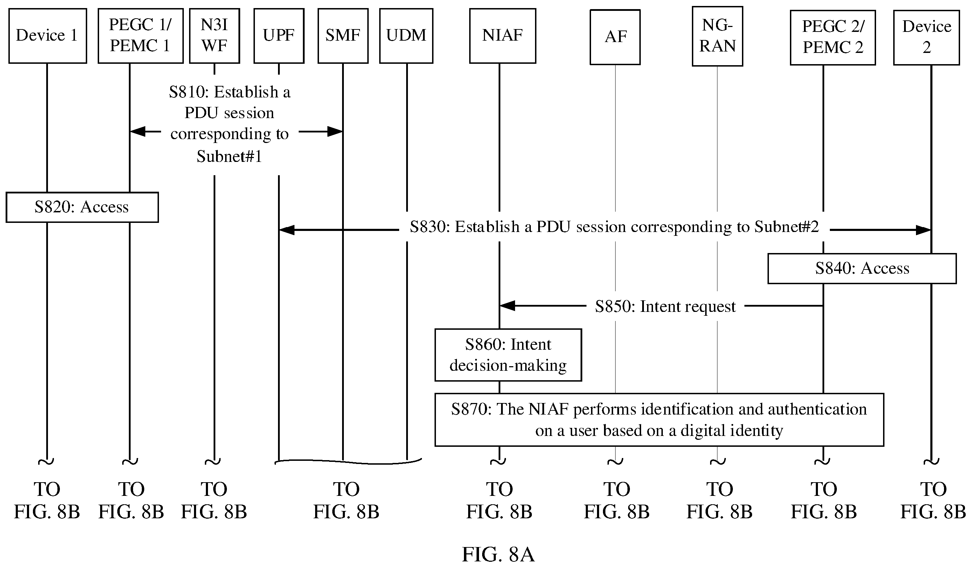

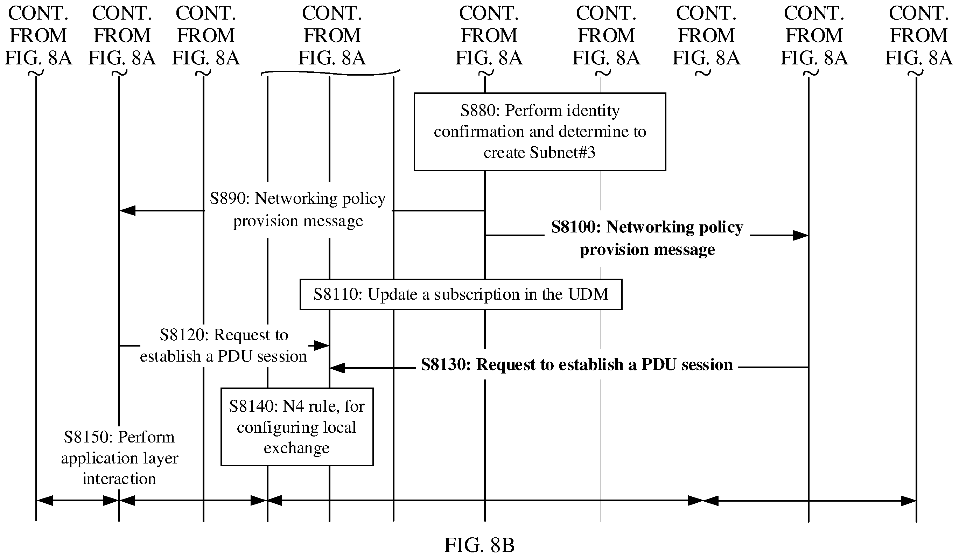

Specifically, with reference to FIG. 8A and FIG. 8B, the implementation includes the following steps:

S810: Establish a PDU session corresponding to Subnet#1.

For example, a PEMC 1 in the user A's home network registers a PEGC 1 and devices in the home network with an AF. The AF sends, to a UDM via an NEF, a request for creating the subnet Subnet#1. An identifier assigned by the UDM to Subnet#1 is (an S-NSSAI 1, a DNN 1). A user identifier of the PEGC 1 is an SUPI 1. The PEMC 1 configures the PEGC 1. After the gateway PEGC 1 is activated, the PEGC 1 may interact with the network based on a configuration to request to establish the PDU session corresponding to Subnet#1. Specifically, the PEGC 1 sends a PDU session establishment request message to the network, where the message carries (the S-NSSAI 1, the DNN 1). The SMF selects a UPF based on (the S-NSSAI 1, the DNN 1).

S820: Activate a device 1 to access the PEGC 1.

The device 1 is a device in the user A's home network.

S830: Establish a PDU session corresponding to Subnet#2.

For example, a PEMC 2 in the in-vehicle network of a user M registers a PEGC 2 and devices in the in-vehicle network with the AF. The AF sends, to the UDM via the NEF, a request for creating the subnet Subnet#2. An identifier assigned by the UDM to Subnet#2 is (an S-NSSAI 2, a DNN 2). A user identifier of the PEGC 2 is an SUPI 2. The PEMC 2 configures the PEGC 2. After the gateway PEGC 2 is activated, the PEGC 2 may interact with the network based on a configuration to request to establish the PDU session corresponding to Subnet#2. Specifically, the PEGC 2 sends a PDU session establishment request message to the network, where the message carries (the S-NSSAI 2, the DNN 2). The SMF selects a UPF based on (the S-NSSAI 2, the DNN 2).

S840: Activate a device 2 to access the PEGC 2.

The device 2 is a device in the user A's in-vehicle network.

S850: The user A sends the intent request to the NIAF via the in-vehicle terminal (the PEGC 2).

The user A and the user M may be the same user (the vehicle is purchased by the user A) or may be different users (the vehicle belongs to the user A's friend or is leased by the user A). The PEGC 2 may send the intent to the NIAF through a control plane message, or may send the intent through a user plane. For details, refer to the description in S410. Details are not described again.

S860: The NIAF performs intent decision-making.

That is, the NIAF determines, based on the user A's intent request, that the user A wants to use the devices in the in-vehicle network and the devices in the home network to form a network.

S870: The NIAF performs identification and authentication on the user based on a digital identity.

For example, the NIAF performs identification and authentication based on the SUPI 2, a received image (obtained using a camera of a mobile phone) or speech (obtained using a microphone of the mobile phone), and the user A's digital identity in the network. The NIAF may determine, based on the SUPI 2 and the user A's digital identity, whether the SUPI 2 is a terminal device subscribed to by the user A. If the SUPI 2 is not a terminal device subscribed to by the user A, the NIAF may determine the user M with a subscription based on the SUPI 2.

S880: The NIAF performs identity confirmation and determines to establish Subnet#3.

Subnet#3 is an example of the first subnet in S420.

In a possible manner, if the user A and the user M are the same user, when the identification and authentication succeed, the NIAF requests, from the UDM, a subscription of a subnet service subscribed to by the user A. The NIAF obtains subscription description information in step S810 and step S830.

In another possible manner, if the user A and the user M are not the same user, the NIAF contacts a digital intelligent human avatar of the user M or the user M (for example, by sending a confirmation SMS message) to confirm whether the user A is allowed to connect the in-vehicle network to another network. Generally, when the user A leases a vehicle from the user M, the user M updates a digital avatar of the user M to authorize the user A to form a network. After obtaining the subscription of the subnets by the user A and the user M from the UDM, the NIAF interacts with the AF to obtain the devices in the subnets Subnet#1 and Subnet#2, and uses, based on the user A's intent, the in-vehicle camera and the PAD in the in-vehicle network and the smart screen and the NAS in the home network to form a same subnet.

S890: The NIAF sends a networking policy provision message to the PEGC 1/the PEMC 1.

The message includes an indication for forming Subnet#3, an identifier (an S-NSSAI 3, a DNN 3) of Subnet3, and an identifier of a device (that is, Device#C) (the smart screen and the NAS) added to Subnet3.

S8100: The NIAF sends a networking policy provision message to the PEGC 2/the PEMC 2.

The message includes the indication for forming Subnet#3, the identifier (the S-NSSAI 3, the DNN 3) of Subnet3, and an identifier of a device (that is, Device#E) (the in-vehicle camera and the PAD) added to Subnet3.

S8110: The NIAF updates the subscription in the UDM.

To be specific, subscription information of the subnet Subnet#3 is added, including the SUPI 1, the SUPI 2, and the identifier (the S-NSSAI 3, the DNN 3) of Subnet#3, or subscription information in the SUPI 1 and subscription information in the SUPI 2 include the S-NSSAI 3 and the DNN 3.

S8120: The PEGC 1 sends, to the SMF, a message for requesting to establish a PDU session.

The message includes the S-NSSAI 3 and the DNN 3. The SMF obtains the subscription information from the UDM, accepts a request from the PEGC 1, and selects a UPF for a PDU session.

S8130: The PEGC 2 sends, to the SMF, a message for requesting to establish a PDU session.

The message includes the S-NSSAI 3 and the DNN 3. The SMF obtains the subscription information from the UDM, accepts a request from the PEGC 2, and selects a UPF for a PDU session.

S8140: The SMF sends an N4 rule to the UPF for configuring local exchange.

For example, data packets of the smart screen, the NAS, the in-vehicle camera, and the PAD, are locally exchanged at the UPF.

S8150: Perform application layer interaction.

For example, the user A searches for the NAS using the PAD, and views movies stored on the NAS. The smart screen searches for the in-vehicle camera and views shot images.

For a scenario in which the user A's home network and in-vehicle network are not in a same management domain, an implementation procedure is similar to the foregoing procedure. A difference lies in that in S8120 and S8130, different UPFs are selected for PDU sessions established by the PEGC 1 and the PEGC 2. In this case, the NIAF is responsible for establishing a tunnel between two different UPFs, to establish communication.

In a possible implementation 4, the user A sends an intent to an NIAF via a user interface of an in-vehicle terminal: (1) Have family members view, on the smart screen, pictures shot by the in-vehicle camera. (2) Play Movie#1 on the NAS using the rear-seat PAD. The in-vehicle terminal and the home network are in a same management domain. In this implementation, the NIAF may assist, based on the user A's intent request, the in-vehicle camera and the PAD in the in-vehicle network and the smart screen and the NAS in the home network to form a same subnet. Because the in-vehicle subnet and the home subnet are in the same management domain, a same SMF or a same SMF set is responsible for managing PDU session establishment of a PEGC of the in-vehicle subnet and a PEGC of the home subnet. In addition, devices in the home network and the in-vehicle network are all registered with an application server provided by a third party. This implementation is applicable to the communication architecture shown in FIG. 5B.

S910: Establish a PDU session corresponding to Subnet#1.

For example, a PEMC 1 in the user A's home network registers a PEGC 1 and devices in the home network with a third-party AS 1. The AS 1 sends, to a UDM via an NEF, a request for creating the subnet Subnet#1. An identifier assigned by the UDM to Subnet#1 is (an S-NSSAI 1, a DNN 1). A user identifier of the PEGC 1 is an SUPI 1. The PEMC 1 configures the PEGC 1. After the gateway PEGC 1 is activated, the PEGC 1 may interact with the network based on a configuration to request to establish the PDU session corresponding to Subnet#1. Specifically, the PEGC 1 sends a PDU session establishment request message to the network, where the message carries (the S-NSSAI 1, the DNN 1). The SMF selects a UPF based on (the S-NSSAI 1, the DNN 1).

S920: Activate a device 1 to access the PEGC 1.

The device 1 is a device in the user A's home network.

S930: Establish a PDU session corresponding to Subnet#2.

For example, a PEMC 2 in the in-vehicle network of a user M registers a PEGC 2 and devices in the home network with a third-party AS 2. The AS 2 sends, to the UDM via the NEF, a request for creating the subnet Subnet#2. An identifier assigned by the UDM to Subnet#2 is (an S-NSSAI 2, a DNN 2). A user identifier of the PEGC 2 is an SUPI 2. The PEMC 2 configures the PEGC 2. After the gateway PEGC 2 is activated, the PEGC 2 may interact with the network based on a configuration to request to establish the PDU session corresponding to Subnet#2. Specifically, the PEGC 2 sends a PDU session establishment request message to the network, where the message carries (the S-NSSAI 2, the DNN 2). The SMF selects a UPF based on (the S-NSSAI 2, the DNN 2).

S940: Activate a device 2 to access the PEGC 2.

The device 2 is a device in the user A's in-vehicle network.

S950: The user A sends the intent request to the NIAF via the in-vehicle terminal (the PEGC 2).

The user A and the user M may be the same user (the vehicle is purchased by the user A) or may be different users (the vehicle belongs to the user A's friend or is leased by the user A). The PEGC 2 may send the intent to the NIAF through a control plane message, or may send the intent through a user plane. For details, refer to the description in S410. Details are not described again.

S960: The NIAF performs intent decision-making.

That is, the NIAF determines, based on the user A's intent request, that the user A wants to use the devices in the in-vehicle network and the devices in the home network to form a network.

S970: The NIAF performs identification and authentication on the user based on a digital identity.

For example, the NIAF performs identification and authentication based on the SUPI 2, a received image (obtained using a camera of a mobile phone) or speech (obtained using a microphone of the mobile phone), and the user A's digital identity in the network. The NIAF may determine, based on the SUPI 2 and the user A's digital identity, whether the SUPI 2 is a terminal device subscribed to by the user A. If the SUPI 2 is not a terminal device subscribed to by the user A, the NIAF may determine the user M with a subscription based on the SUPI 2.

S980: The NIAF performs identity confirmation and determines to establish Subnet#3.

Subnet#3 is an example of the first subnet in S420.

In a possible manner, if the user A and the user M are the same user, when the identification and authentication succeed, the NIAF requests, from the UDM, a subscription of a subnet service subscribed to by the user A. The NIAF obtains subscription description information in step S910 and step S930.

In another possible manner, the user A and the user M are not the same user, and the NIAF contacts a digital intelligent human avatar of the user M or the user M (for example, by sending a confirmation SMS message) to confirm whether the user A is allowed to connect the in-vehicle network to another network. If the user A is allowed to connect the in-vehicle network to another network, the NIAF requests subscriptions of subnet services by the user A and the user M from the UDM. Generally, when the user A leases a vehicle from the user M, the user M updates a digital avatar of the user M to authorize the user A to form a network. After obtaining the subscriptions of the subnets from the UDM, the NIAF interacts with an AF to obtain the devices in the subnets Subnet#1 and Subnet#2, and uses, based on the user A's intent, the in-vehicle camera and the PAD in the in-vehicle network and the smart screen and the NAS in the home network to form a same subnet.

S990: The NIAF requests to obtain information about Subnet#1 from the AS 1 (an example of a first application server).

The information about Subnet#1 includes the PEGC 1 (the SUP 1) (an example of Device#A), the PEMC 1, and other devices in the subnet.

S9100: The NIAF requests to obtain information about Subnet#2 from the AS 2 (an example of a second application server).

The information about Subnet#2 includes the PEGC 2 (the SUP 2) (an example of Device#D), the PEMC 2, and other devices in the subnet.

S9110: The NIAF sends a networking policy provision message to the PEMC 1/the PEGC 1 via the AS 1.

The message includes an indication for forming Subnet#3, an identifier (an S-NSSAI 3, a DNN 3) of Subnet3, and an identifier of a device (that is, Device#C) (the smart screen and the NAS) added to Subnet3. The AS 1 further sends the networking policy provision message to the PEMC 1/the PEGC 1.

S9120: The NIAF sends a networking policy provision message to the PEMC 2/the PEGC 2 via the AS 2.

The message includes the indication for forming Subnet#3, the identifier (the S-NSSAI 3, the DNN 3) of Subnet3, and an identifier of a device (that is, Device#E) (the in-vehicle camera and the PAD) added to Subnet3. The AS 1 further sends the networking policy provision message to the PEMC 2/the PEGC 2.

S9130: The NIAF updates the subscription in the UDM.

To be specific, subscription information of the subnet Subnet#3 is added, including the SUPI 1, the SUPI 2, and the identifier (the S-NSSAI 3, the DNN 3) of Subnet#3, or subscription information in the SUPI 1 and subscription information in the SUPI 2 include the S-NSSAI 3 and the DNN 3.

S9140: The PEGC 1 sends, to the SMF, a message for requesting to establish a PDU session.

The message includes the S-NSSAI 3 and the DNN 3. The SMF obtains the subscription information from the UDM, accepts a request from the PEGC 1, and selects a UPF for a PDU session.

S9150: The PEGC 2 sends, to the SMF, a message for requesting to establish a PDU session.

The message includes the S-NSSAI 3 and the DNN 3. The SMF obtains the subscription information from the UDM, accepts a request from the PEGC 2, and selects a UPF for a PDU session.

S9160: The SMF sends an N4 rule to the UPF for configuring local exchange.

For example, data packets of the smart screen, the NAS, the in-vehicle camera, and the PAD, are locally exchanged at the UPF.

S9170: Perform application layer interaction.

For example, the user A searches for the NAS using the PAD, and views movies stored on the NAS. The smart screen searches for the in-vehicle camera and views shot images.

For a scenario in which the user A's home network and in-vehicle network are not in a same management domain, an implementation procedure is similar to the foregoing procedure. A difference lies in that in S9140 and S9150, different UPFs are selected for PDU sessions established by the PEGC 1 and the PEGC 2. In this case, the NIAF is responsible for establishing a tunnel between two different UPFs, to establish communication.

Finally, apparatus embodiments in embodiments of this application are described.

To implement the functions in the method provided in this application, each communication apparatus, for example, a network element or a terminal device, may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

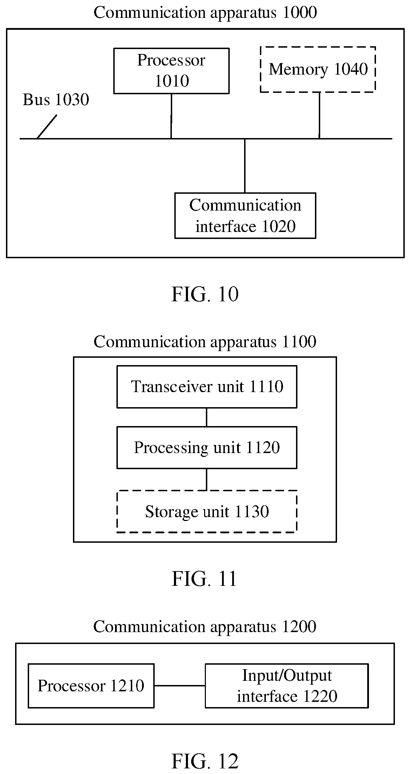

FIG. 10 is a block diagram of a communication apparatus 1000 according to an embodiment of this application. The communication apparatus 1000 includes a processor 1010 and a communication interface 1020. The processor 1010 and the communication interface 1020 may be connected to each other through a bus 1030. The communication apparatus 1000 may be at least one of the foregoing network elements, for example, may be an NIAF.

Optionally, the communication apparatus 1000 may further include a memory 1040. The memory 1040 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1040 is configured to store instructions and data.

The processor 1010 may be one or more central processing units (central processing units, CPUs). When the processor 1010 is one CPU, the CPU may be a single-core CPU, or may be a multi-core CPU.

When the communication apparatus 1000 is an NIAF network element, for example, the communication apparatus 1000 is configured to perform the following operations: selecting a first subnet, creating a first subnet, and the like.

When the communication apparatus 1000 is an SMF network element, for example, the communication apparatus 1000 is configured to perform the following operations: establishing a PDU session, and the like.

When the communication apparatus 1000 is a UPF network element, for example, the communication apparatus 1000 is configured to perform the following operations: processing subscription information, and the like.

When the communication apparatus 1000 is a terminal device, for example, a first device, for example, the communication apparatus 1000 is configured to perform the following operations: sending first information, receiving second information, accessing a first subnet, and the like.

The content is merely used as an example for description. When the communication apparatus 1000 is at least one of the foregoing network elements, the communication apparatus 1000 is responsible for performing at least one related method or step of the network elements in the foregoing method embodiments.

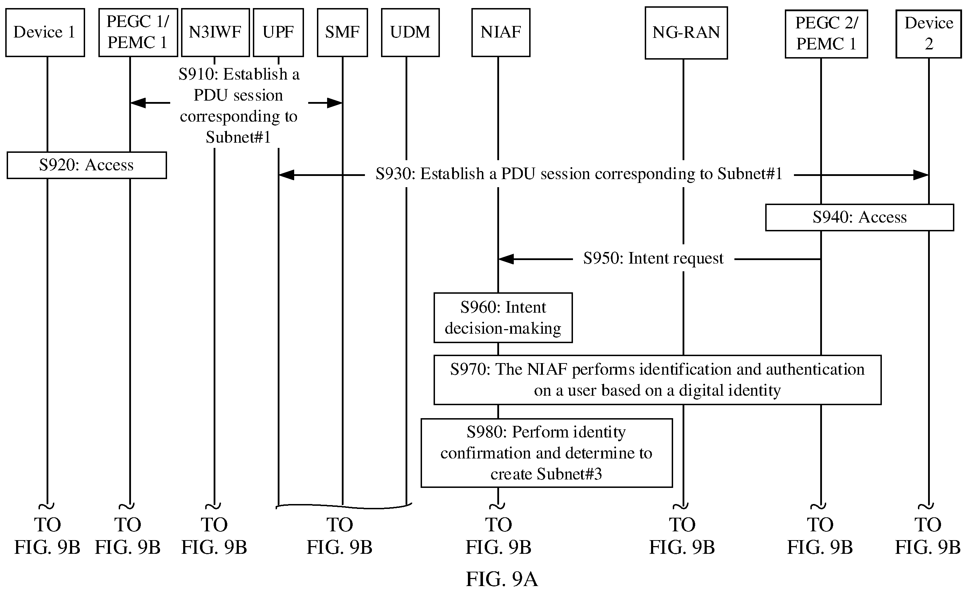

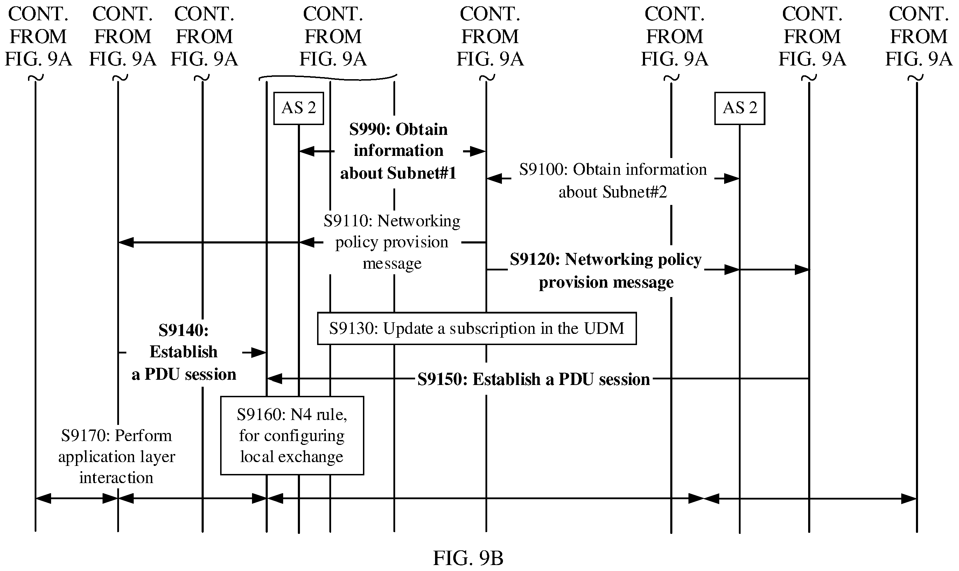

The foregoing descriptions are merely examples. For specific content, refer to the content shown in the method embodiments. For implementations of the operations in FIG. 10, further correspondingly refer to the corresponding descriptions of the method embodiments shown in FIG. 4 to FIG. 9A and FIG. 9B.

FIG. 11 is a block diagram of a communication apparatus 1100 according to an embodiment of this application. The communication apparatus 1100 may be at least one of the foregoing communication apparatuses, or may be a chip or a module in each communication apparatus, and is configured to implement the method in the foregoing embodiments. The communication apparatus 1100 includes a transceiver unit 1110 and a processing unit 1120. The following describes the transceiver unit 1110 and the processing unit 1120 by using examples.

The transceiver unit 1110 may include a sending unit and a receiving unit. The sending unit is configured to perform a sending action of the communication apparatus 1100, and the receiving unit is configured to perform a receiving action of the communication apparatus 1100. For ease of description, in embodiments of this application, the sending unit and the receiving unit are combined into one transceiver unit. Unified descriptions are provided herein, and details are not described again below.

When the communication apparatus 1100 is an NIAF, for example, the transceiver unit 1110 is configured to receive first information from a first device, and the processing unit 1120 is configured to determine a first subnet from at least one subnet based on an intent of a first user, or form the first subnet based on the intent of the first user.

When the communication apparatus 1100 is a terminal device, for example, the first device, for example, the transceiver unit 1110 is configured to receive second information.

The content is merely used as an example for description. When the communication apparatus 1100 is at least one of the foregoing communication apparatuses, the communication apparatus 1100 is responsible for performing at least one related method or step of the communication apparatuses in the foregoing method embodiments.

Optionally, the communication apparatus 1100 further includes a storage unit 1130. The storage unit 1130 is configured to store a program or code used to perform the foregoing method.

The apparatus embodiments shown in FIG. 10 and FIG. 11 are used for implementing the content described in FIG. 4 to FIG. 9A and FIG. 9B. For specific execution steps and methods of the apparatuses shown in FIG. 10 and FIG. 11, refer to the content described in the foregoing method embodiments.

FIG. 12 is a block diagram of a communication apparatus 1200 according to an embodiment of this application. The communication apparatus 1200 is configured to implement at least one function of the foregoing communication apparatuses. The communication apparatus 1200 may be a chip in at least one of the foregoing communication apparatuses.

The communication apparatus 1200 includes an input/output interface 1220 and a processor 1210. The input/output interface 1220 may be an input/output circuit. The processor 1210 may be a signal processor, a chip, or another integrated circuit that can implement the methods in this application. The input/output interface 1220 is configured to input or output a signal or data.

For example, when the communication apparatus 1200 is a first network element, the input/output interface 1220 is configured to receive first information from a terminal device, and the processor 1210 is configured to determine a first subnet from at least one subnet based on an intent of a first user, or form the first subnet based on the intent of the first user.

In a possible implementation, the processor 1210 executes instructions stored in a memory, to implement a function implemented by at least one of the foregoing first network element, second network element, third network element, or fourth network element.

Optionally, the communication apparatus 1200 further includes the memory.

Optionally, the processor and the memory are integrated together.

Optionally, the memory is located outside the communication apparatus 1200.

In a possible implementation, the processor 1210 may be a logic circuit, and the processor 1210 inputs/outputs a message or signaling through the input/output interface 1220. The logic circuit may be a signal processor, a chip, or another integrated circuit that can implement the methods in embodiments of this application.

The foregoing descriptions of the communication apparatus 1200 are merely an example for description. The communication apparatus 1200 can be configured to perform the methods in the foregoing embodiments. For specific content, refer to the descriptions of the foregoing method embodiments. Details are not described herein again.

It should be further understood that the foregoing communication apparatuses are also applicable to various devices, such as a first device, a second device, a third device, a fourth device, an X^{th} device, and an application server.

This application further provides a chip, including a processor, configured to invoke instructions from a memory and run the instructions stored in the memory, to cause a communication device on which the chip is installed to perform the methods in the foregoing examples.

This application further provides a chip, including an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes the memory. The memory is configured to store a computer program or code.

This application further provides a processor, configured to be coupled to a memory, and configured to perform at least one method and function of the foregoing communication apparatuses in any one of the foregoing embodiments.

This application provides a computer program product including instructions. When the computer program product runs on a computer, the methods in the foregoing embodiments are implemented.

This application further provides a computer program. When the computer program is executed by a computer, the method in the foregoing embodiment is implemented.

This application further provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatuses, and method may be implemented in another manner. For example, the foregoing described apparatus embodiments are merely examples. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the technical solutions of embodiments of this application.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method embodiments in this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the scope of protection of this application. Any variation or replacement readily figured out by a person skilled in the art within the technical scope disclosed in this application shall fall within the scope of protection of this application. Therefore, the scope of protection of this application shall be subject to the scope of protection of the claims.

## Claims

1. A communication method, wherein the method comprises:
receiving first information, wherein the first information describes an intent of a first user;
determining a first subnet from at least one subnet based on the intent of the first user, or forming the first subnet based on the intent of the first user; and
sending second information, wherein the second information indicates the first subnet.

2. The method according to claim 1, wherein determining the first subnet from the at least one subnet based on the intent of the first user comprises:
determining, based on the intent of the first user, a service type of a subnet that the first user requests to access; and
determining, as the first subnet, a subnet that is of the at least one subnet and that has a same service type as the subnet that the first user requests to access.

3. The method according to claim 1 or 2, wherein the method further comprises:
receiving a first user identifier, wherein the first user identifier is associated with the first user;
and
determining the at least one subnet based on the first user identifier, wherein the at least one subnet is a subnet subscribed to by the first user.

4. The method according to claim 1 or 2, wherein the method further comprises:
receiving a first user identifier, wherein the first user identifier is associated with the first user;
and
determining the at least one subnet based on the first user identifier and relationship information between the first user and a second user, wherein the at least one subnet is a subnet subscribed to by the second user, and the intent of the first user comprises the relationship information between the first user and the second user.

5. The method according to claim 4, wherein the method further comprises:
determining, based on verification information of the second user, that a first device is allowed to access the first subnet, wherein the first device is a device that sends the intent of the first user.

6. The method according to any one of claims 2 to 5, wherein the second information comprises an identifier of the first subnet.

7. The method according to claim 6, wherein the identifier of the first subnet is used by the first device to establish a first session, and the first device is the device that sends the intent of the first user.

8. The method according to claim 7, wherein if the first session and a second session that is established by a second device in the first subnet are in different management domains, the method further comprises:
establishing a communication tunnel between a second network element and a third network element, wherein the second network element is a user plane network element for the first session, and the third network element is a user plane network element for the second session.

9. The method according to claim 1, wherein forming the first subnet based on the intent of the first user comprises:
forming the first subnet from at least two devices based on the intent of the first user, wherein the at least two devices comprise a third device and a fourth device, the third device belongs to a second subnet, the fourth device belongs to a third subnet, and the second subnet is different from the third subnet.

10. The method according to claim 9, wherein the method further comprises:
receiving a second user identifier, wherein the second user identifier is associated with the first user; and
determining, based on the second user identifier, the second subnet and the third subnet that are subscribed to by the first user.

11. The method according to claim 9, wherein the method further comprises:
receiving a third user identifier and identity information of the first user, wherein the third user identifier is associated with a second user;
determining, based on the third user identifier, the second subnet subscribed to by the second user; and
determining, based on the identity information of the first user, the third subnet subscribed to by the first user.

12. The method according to claim 11, wherein the method further comprises:
determining, based on verification information of the third user, that the third device and the fourth device are allowed to form a network.

13. The method according to any one of claims 9 to 12, wherein the second information comprises an identifier of the first subnet and an identifier of the third device, the identifier of the first subnet is used by a first device to establish a third session, the third device accesses a communication network via the first device, and the method further comprises:
sending third information to a fifth device, wherein the third information comprises the identifier of the first subnet and an identifier of the fourth device, the identifier of the first subnet is used by the fifth device to establish a fourth session, and the fourth device accesses the communication network via the fifth device.

14. A communication method, performed by a communication apparatus, wherein the method comprises:
sending first information, wherein the first information describes an intent of a first user;
receiving second information, wherein the second information indicates a first subnet, and the first subnet is determined from at least one subnet based on the intent of the first user, or the first subnet is formed based on the intent of the first user; and
accessing the first subnet based on the second information.

15. The method according to claim 14, wherein the first subnet is determined from the at least one subnet, the first subnet is a subnet that is of the at least one subnet and that has a same service type as a subnet that the first user requests to access, and the service type of the subnet that the first user requests to access is determined based on the intent of the first user.

16. The method according to claim 14 or 15, wherein the method further comprises:
sending a first user identifier, wherein the first user identifier is associated with the first user, the first user identifier is used to determine the at least one subnet, and the at least one subnet is a subnet subscribed to by the first user.

17. The method according to claim 14 or 15, wherein the method further comprises:
sending a first user identifier, wherein the first user identifier is associated with the first user, the first user identifier and relationship information between the first user and a second user are used to determine the at least one subnet, the at least one subnet is a subnet subscribed to by the second user, and the intent of the first user comprises the relationship information between the first user and the second user.

18. The method according to claim 17, wherein that the communication apparatus is allowed to access the first subnet is determined based on verification information of the second user.

19. The method according to any one of claims 14 to 18, wherein the second information comprises an identifier of the first subnet.

20. The method according to claim 19, wherein the method further comprises:
establishing a first session based on the identifier of the first subnet.

21. The method according to claim 20, wherein if the first session and a second session that is established by a second device in the first subnet are in different management domains, the method further comprises:
establishing a communication tunnel between a second network element and a third network element, wherein the second network element is a user plane network element for the first session, and the third network element is a user plane network element for the second session.

22. The method according to claim 14, wherein the first subnet is formed based on the intent of the first user, the first subnet comprises a third device and a fourth device, the third device belongs to a second subnet, the fourth device belongs to a third subnet, and the second subnet is different from the third subnet.

23. The method according to claim 22, wherein the method further comprises:
sending a second user identifier, wherein the second user identifier is associated with the first user, and the second user identifier is used to determine the second subnet and the third subnet that are subscribed to by the first user.

24. The method according to claim 22, wherein the method further comprises:
sending a third user identifier and identity information of the first user, wherein the third user identifier is associated with a second user, the third user identifier is used to determine the second subnet subscribed to by the second user, and the identity information of the first user is used to determine the third subnet subscribed to by the first user.

25. The method according to claim 24, wherein verification information of the second user is used to determine that the third device and the fourth device are allowed to form a network.

26. The method according to any one of claims 22 to 25, wherein the second information comprises an identifier of the first subnet and an identifier of the third device, the identifier of the first subnet is used to establish a third session, and the third device accesses a communication network via the communication apparatus.

27. The method according to claim 26, wherein the method further comprises:
establishing the third session based on the identifier of the first subnet.

28. The method according to any one of claims 14 to 27, wherein the communication apparatus is a terminal device or a chip in the terminal device.

29. A communication apparatus, comprising a unit configured to perform the method according to any one of claims 1 to 13 or any one of claims 14 to 28.

30. A communication apparatus, comprising a processor, configured to execute computer instructions stored in a memory, to cause the communication apparatus to perform the method according to any one of claims 1 to 13, or to cause the communication apparatus to perform the method according to any one of claims 14 to 28.

31. A computer-readable storage medium, wherein the computer-readable storage medium stores a computer program or instructions, and when the computer program or the instructions are executed by a computer, the computer is caused to perform the method according to any one of claims 1 to 13, or the computer is caused to perform the method according to any one of claims 14 to 28.

32. A computer program product, wherein the computer program product comprises a computer program or instructions, and when the computer program or the instructions are executed by a computer, the computer is caused to perform the method according to any one of claims 1 to 13, or the computer is caused to perform the method according to any one of claims 14 to 28.

33. A communication system, comprising a communication apparatus configured to perform the method according to any one of claims 1 to 13 and a communication apparatus configured to perform the method according to any one of claims 14 to 28.

34. A communication method, wherein the method comprises:
sending first information, wherein the first information describes an intent of a first user;
determining a first subnet from at least one subnet based on the intent of the first user, or forming the first subnet based on the intent of the first user;
sending second information, wherein the second information indicates the first subnet; and
accessing the first subnet based on the second information.
